(19) Europäisches Patentamt / European Patent Office / Office européen des brevets

(11) EP 2 844 505 B1

(12) **EUROPEAN PATENT SPECIFICATION**

(45) Date of publication and mention
of the grant of the patent:
**08.05.2019 Bulletin 2019/19**

(21) Application number: **13720133.1**

(22) Date of filing: **29.04.2013**

(51) Int Cl.:
*B60G 11/27* *(2006.01)*    *B60G 17/052* *(2006.01)*
*F16F 9/04* *(2006.01)*

(86) International application number:
**PCT/NL2013/050320**

(87) International publication number:
**WO 2013/165238 (07.11.2013 Gazette 2013/45)**

(54) **AIR SPRING WITH AN INVERSION PROTECTION SYSTEM**

LUFTFEDER MIT EINEM ANTI-VAKUUM SYSTEM

RESSORT À AIR COMPRENANT UN SYSTÈME DE PROTECTION EN DÉTENTE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **01.05.2012 NL 2008736**

(43) Date of publication of application:
**11.03.2015 Bulletin 2015/11**

(73) Proprietor: **Meijlink, Thomas Josephus Johannes
5211 TM Den Bosch (NL)**

(72) Inventor: **Meijlink, Thomas Josephus Johannes
5211 TM Den Bosch (NL)**

(74) Representative: **V.O.
P.O. Box 87930
2508 DH Den Haag (NL)**

(56) References cited:

| EP-A1- 0 474 171 | EP-A2- 2 243 977 |
| WO-A1-99/33676 | DE-A1-102004 011 466 |
| DE-A1-102005 004 969 | DE-A1-102011 115 986 |
| FR-A- 1 337 108 | GB-A- 1 231 766 |
| US-B1- 6 604 734 | US-B1- 7 104 561 |

**Description**

TECHNICAL FIELD

The invention relates to an air spring according to the preamble of claim 1 and a method for preventing air spring inversion. An example of such an air spring is disclosed in EP 0 474 171 A1.

BACKGROUND

Air suspension systems are common in automotive and freight transport applications. Vehicles ranging from automobiles to tractor trailers are fitted with an air suspension comprising air springs. Pressurized gas is used to fill an air cell, such as a bag or sleeve, which in turn acts as an adjustable compression spring. The air spring is commonly placed between the axle and chassis and provides a smooth constant ride by improving road engagement and buffering axle and wheel vibration. Air spring should be understood to at least include bellows, air bags, and rolling air sleeves.

Suspension systems comprising air springs are powered by pressurized gas. When the pressurized gas supply system is off, air springs are particularly susceptible to inversion. Inversion, or sometimes referred to as anti-vacuum, occurs when the pressure inside the air cell is lower than the ambient pressure of the surrounding air. This situation typically occurs when the air spring is in an unloaded condition and/or the pressurized gas supply system is turned off or not connected, while the air spring is extended. This situation may also arise in extreme road conditions. For example, when the air spring is suddenly extended as the vehicle drives over a deep pothole. As the air spring extends, the pressure in the spring decreases as the volume of the spring increases. Inversion occurs when the pressure inside the air cell decreases to such an extent that the air spring walls have a concave shape instead of a typical convex shape. After the spring inverts it may have difficulty being correctly inflated again, or if the air spring was unloaded, it may become damaged when a load is reapplied.

This is a common problem at distribution centers. Trailers and semitrailers are frequently jacked up and towed from one location to another by a yard truck. As the trailers are only being moved a short distance, the operator typically does not connect or power the pressurized gas supply system. The air springs are extended as a result of the trailer being jacked up, and without the pressurized gas supply system, the air springs are vulnerable to inversion. A similar situation occurs when vehicles or trailers are lifted from ships and rail cars. Again without the pressurized gas supply system, the unloaded air springs extend and become vulnerable to inversion. Damage may occur when a load is reapplied, e.g. when the lifted vehicle or trailer is repositioned on a bearing surface.

US7104561 discloses an air spring with an anti-vacuum system. The system includes one-way valves in the air cell, the flexible tubular member, that equalize the pressure within the air cell with the surrounding atmospheric pressure if a vacuum condition occurs. When the air cell is pressurized, the one-way valves remain closed. If a vacuum condition occurs, the valves open and equalize the pressure. However, in most cases the unloaded axle pivots away from the chassis so quickly that the anti-vacuum system is overwhelmed. Accordingly, US7104561 proposes a mechanical solution by providing a mechanical damper which prevents the axle assembly from quickly extending away from the chassis at a speed which overwhelms the anti-vacuum system. This system is complex and requires an additional expensive mechanical part.

SUMMARY OF THE INVENTION

It is an object of the present invention to provide an air spring that is less susceptible to air spring inversion and a method for preventing, or at least diminishing the risk of, air spring inversion. More in general it is an object of the present invention to provide an improved air spring. In a more general sense it is thus an object of the invention to overcome or ameliorate at least one of the disadvantages of the prior art. It is also an object of the present invention to provide alternative structures which are less cumbersome in assembly and operation and which moreover can be made relatively inexpensively. Alternatively it is an object of the invention to at least provide the public with a useful choice.

Thereto, according to the invention is provided an air spring according to claim 1.

The air spring comprises a mounting plate, a flexible tubular member, and a piston. The flexible tubular member, the mounting plate and the piston form a substantially gastight main chamber. The air spring is provided with an inlet arranged to be in fluid communication with a pressurized gas supply system. The flexible member defines a contour. The air spring further comprises a substantially gastight reserve chamber directly mounted to or at least adjacent to one of the mounting plate and the piston. The substantially gastight reserve chamber is in fluid communication with the main chamber through at least one valve. The at least one valve is arranged to selectively open if the pressure in the main chamber is less than a first predetermined threshold resulting in an inflow of gas from the reserve chamber to the main chamber.

The first predetermined threshold is chosen to indicate when the air spring is susceptible to inversion. The first predetermined threshold may be chosen on the basis of the properties of the air spring, i.e. size and material. It is also conceivable that the first predetermined threshold may be chosen on the basis of the specific application of the air spring, i.e. gross trailer weight and expected road conditions. When the pressure in the main chamber is less than the first predetermined threshold, the at least one valve is opened to allow the pressurized gas stored in the reserve chamber to flow from the reserve chamber to the main chamber, thus providing the air spring with enough pressurized gas to prevent the spring from inverting. As the piston or the mounting plate is advantageously provided with the reserve chamber, the pressurized gas flowing from the reserve chamber to the main chamber does not encounter any delay or resistance from additional piping or tubing. If the reserve chamber is mounted adjacent to the mounting plate or the piston of the air spring, pressurized gas flowing from the reserve chamber to the main chamber may also not encounter any substantial delay or resistance impeding the prevention of inversion. When the reserve chamber is mounted adjacent to the mounting plate or piston, the reserve chamber may be in fluid communication with the at least one valve and the main chamber through a short length of piping or tubing. The short length of piping or tubing is preferably less than 100 cm long and more preferably less than 50 cm long. Typically, an air spring is included in an air spring suspension system. Generally, the air spring is mounted between a chassis and a trailing arm of an axle. It will be appreciated that the reserve chamber can be mounted adjacent to one of the mounting plate and the piston by mounting the reserve chamber to one of an axle, a trailing arm of the axle, and a portion of the chassis directly overhead of the air spring. The pressurized gas in the reserve chamber can be provided quickly enough to prevent the air spring from inverting. Furthermore, the size of the reserve chamber may be chosen on the basis of the properties of the air spring, i.e. size and material. It is also conceivable that the size of the reserve chamber may be chosen on the basis of the specific application of the air spring, i.e. gross trailer weight and expected road conditions.

Here it is noted that DE102010017638 discloses an air spring including an airtight pressure compartment located in an interior of an air spring. DE102010017638 mentions that the interior of the pressure chamber can be connected to the interior of the air spring through a throttle opening. Nevertheless, DE102010017638 does not disclose a valve arranged to selectively open if the pressure in the main chamber is less than a first predetermined threshold. Moreover, DE102010017638 is not at all concerned with inversion of the air spring, but relates to producing energy from pressure fluctuations in an air spring.

US7,104,561B1 discloses an air spring including an air cell and a piston which acts as a compression spring. The air cell is powered by the piston which is driven by a gas feed connected to a vehicle air supply. As the air cell first end has a smaller diameter than the second end, the air cell has a tapered frusto-conical shape when fully inflated. By providing a tight conformal fit between the piston and the first end, and by providing a conical air cell shape, the likelyhood that the air cell will invert is substantially decreased.

As mentioned above, the flexible member defines a contour. This contour defines the outline or profile formed by the flexible member. The contour also defines a volume encompassed by the flexible member.

Optionally, the substantially gastight reserve chamber extends inside the contour. Optionally, the substantially gastight reserve chamber resides inside the contour. If the substantially gastight reserve chamber extends or resides in the contour then the air spring can easily be made to be backwards compatible. In other words an existing air spring could be replaced by an air spring according to the invention without any modifications to surrounding equipment.

Optionally, the substantially gastight reserve chamber extends outside the contour. Optionally the substantially gastight reserve chamber resides outside the contour. If the substantially gastight reserve chamber extends or resides outside the contour then the air spring can easily be made to be retrofittable. In this case an existing air spring can be converted to an air spring according to the invention.

Optionally, the substantially gastight reserve chamber is located at one of a position inside the contour mounted to the mounting plate, outside the contour mounted directly to the mounting plate, inside the contour mounted to the piston, outside the contour directly mounted to a bottom or (lower) side of the piston, and completely internal to the piston.

Optionally, the gastight reserve chamber is completely internal to the piston. In this case, the air spring including the reserve chamber can be provided and installed efficiently as a single product. Similarly, in this embodiment, the pressurized gas flowing from the reserve chamber to the main chamber does not encounter any delay or resistance from additional piping or tubing, and can be provided quickly enough to prevent the air spring from inverting.

Optionally, the first predetermined threshold is one of a predetermined pressure difference between the reserve chamber and the main chamber, a predetermined absolute pressure in the main chamber, and a predetermined relative pressure. If the predetermined threshold is an absolute pressure in the main chamber, then if the pressure in the main chamber has dropped below a predetermined absolute threshold pressure in the main chamber indicating that the air spring is susceptible to inversion, the at least one valve is selectively opened resulting in the flow of pressurized gas from the reserve chamber into the main chamber. This injection of pressurized gas will raise the pressure inside the air spring and prevent the air spring from inverting. The predetermined threshold may also be a relative pressure. The relative pressure may be measured relative to the pressure in the reserve chamber and/or a nominal working pressure in the main chamber. It is also conceivable that the relative pressure is defined as a product of the pressure in the reserve chamber and/or the nominal working pressure, i.e. a product of a constant multiplied by the pressure in the reserve chamber and/or the nominal working pressure. In this case it may be desirable to keep the gas in the reserve chamber at a reference pressure, e.g. an ideal working pressure of the air spring. If the pressure in the main chamber falls below the reference pressure in the reserve chamber offset by a constant, the at least one valve is selectively opened and pressurized gas flows from the reserve chamber into the main chamber preventing the air spring from inverting. The relative pressure may be measured relative to an ambient pressure outside the air spring. If the ambient pressure outside the air spring and outside the flexible member is greater then the pressure in the main chamber, the air spring is susceptible to inversion. As indicated above, the first predetermined threshold is chosen to indicate when the air spring is susceptible to inversion. Therefore comparing the pressure in the main chamber to a predetermined threshold pressure measured relative to the ambient pressure outside the air spring and outside the flexible member provides a good indication as to when the air spring is in danger of inverting. Then the first predetermined threshold can be chosen to be lower than the ambient pressure outside the air spring and outside the flexible member. When the ambient pressure outside the air spring and outside the flexible member is greater than the pressure in the main chamber the air spring is susceptible to inversion.

Optionally, the at least one valve is arranged to selectively open if the pressure in the main chamber is 0.05 bar, or more, less than the ambient pressure. When comparing the pressure in the main chamber to the ambient pressure outside the air spring, it has been found that when the pressure in the main chamber is more than 0.05 bar less than the ambient pressure, it is advisable to protect the air spring against inversion. This is an advantageous pressure difference for opening the at least one valve and allowing pressurized gas to flow from the reserve chamber to the main chamber.

The air spring is commonly placed between the axle and chassis of a vehicle. In some cases, the axle may be attached to a mechanical arm such that when the axle is unloaded it pivots away from the chassis along an arc. This causes the air spring to bend. It has been found that when an air spring extends along an arc, folds may occur in the air spring even when the pressure of the gas in the main chamber is greater than the ambient pressure outside the air spring and outside the flexible member. Generally, folds occur when the pressure of the gas in the main chamber is between 0 and 0,3 bar above the ambient pressure. A fold in an extended air spring increases the risk of inversion when load is reapplied. Optionally, or alternatively, the at least one valve is arranged to selectively open if the pressure in the main chamber is below a minimum overpressure threshold relative to the ambient pressure outside the air spring and outside the flexible member. The minimum overpressure threshold can e.g. be chosen to be 0.4 bar or less, preferably 0.2 bar or less.

Optionally, the at least one valve is further arranged to selectively close if the pressure in the main chamber is greater than or equal to a third predetermined threshold relative to the ambient pressure outside the air spring and outside the flexible member. Optionally, the third predetermined threshold is substantially equal to the ambient pressure outside the air spring and outside the flexible member. In this way the reserve chamber provides a sufficient increase in pressure in the main chamber of the air spring to prevent the air spring from inverting; yet the reserve chamber is closed once the pressure in the main chamber is in equilibrium with the ambient pressure.

This allows for a reserve amount of pressurized gas to remain stored in the reserve chamber. This is especially advantageous when lifting vehicles and/or trailers from ships and rail cars. This type of transport is known as a rolling highway or combined/piggyback transport.

For example, when a tractor trailer vehicle arrives at a rail distribution center, the trailer is generally disconnected from the tractor and the pressurized gas supply system. It is not uncommon that piping of the air suspension system of the trailer is not sealed off from the ambient environment; the main chamber of the air spring is thus in fluid communication with the ambient environment outside the air spring and outside the flexible member. Therefore over a period of time, for example between the trailer being disconnected from the pressurized gas supply system and the lifting of the trailer on to a rail car, the pressure inside the air spring equalizes with the ambient pressure outside the air spring and outside the flexible member. The equalization is not instantaneous and takes time because the piping of the air suspension system of the trailer is long and the cross-section of the piping is relatively small. When the pressure in the main chamber of the air spring is substantially equal to the ambient pressure outside the air spring and outside the flexible member, the air spring is fully compressed. Generally the air spring includes a bump stop such that the air spring is not damaged by the load of the trailer when the air spring is fully compressed.

Next the trailer is typically loaded onto a rail flatcar of a freight train. Typically, a crane may be used to lift the trailer onto the rail flatcar. When the trailer is lifted into the air, the axle becomes unloaded and moves, e.g. pivots, away from the chassis causing the air spring to extend.

Since the air spring is disconnected from the pressurized air supply system, an increase in volume of the main chamber results in a decrease in pressure inside the main chamber of the air spring. Whether or not the piping of the air suspension is sealed off has little effect on rapid changes in pressure and volume of the gas in the main chamber due to an unloading of the axle due to lifting of the trailer. The length of the piping and cross-section of the piping prevent the pressure in the main chamber of the air spring from equalizing quickly, for example while the trailer is being lifted, to the ambient pressure outside the air spring and outside the flexible member. Eventually, the pressure decreases to a point that air spring becomes susceptible to inversion. This point is marked by the first threshold, which is chosen to indicate when the air spring is susceptible to inversion.

The first threshold is generally chosen to prevent that the ambient pressure outside the air spring and outside the flexible member becomes greater than the pressure in the main chamber. Thereto, the first threshold may be chosen to be equal to the ambient pressure, In many applications it suffices to chose the first threshold to be at a slight underpressure relative to the ambient pressure, e.g. in the range of 0.1 to 0 bar less than the ambient pressure outside the air spring and outside the flexible member, e.g. at approximately 0.05 bar underpressure. When the first threshold is reached, the at least one valve opens resulting in an inflow of gas from the reserve chamber to the main chamber.

However, as mentioned above in some cases, e.g. when the axle is mounted to a mechanical arm, the air spring extends along an arc when the axle is unloaded. Even when the pressure in the main chamber of the air spring is above ambient pressure, folds may form in the flexible member. Folds in the flexible member may cause damage to the air spring when the load is reapplied to the axle. In order to prevent folds from forming in the flexible member, the first threshold may be chosen at an overpressure, i.e. above the ambient pressure outside the air spring and outside the flexible member. Optionally, the first threshold is in the range of 0 to 0,4 bar above the ambient pressure outside the air spring and outside the flexible member, preferably, the first threshold is in the range of 0 to 0,3 bar above the ambient pressure outside the air spring and outside the flexible member, and more preferably, the first threshold is in the range of 0 to 0,2 bar above the ambient pressure outside the air spring and outside the flexible member.

Optionally, the inlet of the air spring is provided with an inlet valve arranged to selectively open when the pressure in the main chamber is greater than a fourth predetermined threshold, and to selectively close when the pressure in the main chamber is less than or equal to the fourth predetermined threshold. Hence, the inlet valve allows to prevent a back flow of air out of the main chamber when the pressure in the main chamber is less than or equal to the fourth predetermined threshold. Optionally, the inlet valve comprises a check valve. For instance, the inlet valve comprises two parallel check valves oriented for blocking flow in mutually opposite directions (antiparallel check valves). Optionally, the fourth predetermined threshold is equal to the first predetermined threshold or, e.g. slightly, lower than the first threshold.

When the first threshold is chosen to be above the ambient pressure outside the air spring and outside the flexible member, the inlet valve can be used to prevent the reserve chamber from being emptied while the air spring is loaded, for example during rail and/or water transport. As mentioned above, the unsealed piping of the air suspension system has little effect on rapid changes in pressure and volume of the gas in the main chamber due to an unloading of the axle, for example when the trailer is lifted. However, after the load is reapplied, if the at least one valve is arranged to maintain a super atmospheric pressure in the main chamber, the reserve chamber would eventually, over time, empty due to the unsealed piping of the trailer's air suspension system. The pressure in the main chamber decreases as gas flows slowly from the main chamber to the ambient environment. If the pressure in the main chamber drops below the super atmospheric pressure threshold, the at least one valve opens resulting in an inflow of gas to the main chamber. This cycle repeats until the reserve chamber is emptied. Therefore the inlet of the air spring may include the inlet valve. In this way air spring inversion can be prevented from a single charge of the reserve chamber at a super atmospheric first threshold. It will be appreciated that the inlet valve is not necessary when the first predetermined threshold is less than the ambient pressure outside the air spring and outside the flexible member.

The at least one valve opening causes the pressure in the main chamber to rise. When the pressure in the main chamber is greater than or equal to a third predetermined value, the at least one valve closes. The third predetermined value may indicate that the air spring is no longer in danger of inverting. The third predetermined value is typically, but necessarily, chosen to be approximately 0 to 0.1 higher than the first threshold value. The third predetermined value can e.g. be chosen to be substantially equal to the ambient pressure. Since the at least one valve has closed, some pressurized gas remains in the reserve chamber. Preferably, this remaining reserve gas is pressurized and has a pressure higher than the ambient pressure outside the air spring.

With the air spring out of danger, the air spring is ready to reaccept the load of the trailer when the trailer is placed by the crane onto the rail flatcar. Therefore damage to the air spring is prevented. When the trailer comes to bear on the air spring again, excess air in the air springs may be blown off. This may be caused by the piping of the air suspension not being sealed off, and/or in order to reduce trailer height during rail and/or water transport or to readjust a preset nominal height level. Automatic level setting mechanisms are known in the art.

Commonly, the trailer is not reconnected to a pressurized gas system for this portion of rail and/or water transport. Therefore the pressurized gas in the reserve chamber and in the main chamber, is not replenished during transport. Furthermore, the piping of the air suspension system may not be sealed off during transport, which results in a pressure equalization over time. The pressure in the main chamber of the air spring then becomes substantially equal to the ambient pressure. It will be appreciated that if the first predetermined threshold is chosen to be an overpressure, i.e. above the ambient pressure outside the air spring and outside the flexible member, the inlet valve may be included to prevent the reserve chamber from emptying during transport. At the destination, the trailer is off loaded from the railroad flat car. While the trailer is lifted into the air, the axle becomes unloaded and pivots away from the chassis causing the air spring to extend. Similar to loading, the pressure in the main chamber decreases until the air spring is susceptible to inversion. The at least one valve opens again resulting in an inflow of gas from the reserve chamber to the main chamber. When the pressure in the main chamber has reached a point where the air spring is no longer susceptible to inversion, the third predetermined threshold, the at least one valve is closed. The air spring is again ready to accept the load of the trailer. It is noted that the above situation is relevant for any type of transport where during loading and/or unloading, the air spring is unloaded and extended.

Optionally, the air spring is arranged to prevent air spring inversion of a fully extended air spring at least twice, preferably four times, and more preferably six times from a single charge of the reserve chamber. It will be appreciated that fully extended defines when the air spring is extended at its maximum length. Furthermore, it is noted that the air spring need not be fully extended for the air spring to be susceptible to inversion. When the air spring is disconnected from the pressurized gas supply system, and when the piping of the air supply system is not sealed off, it is preferable that the air spring is arranged to prevent air spring inversion twice. Thereto it is then preferred that the third threshold value is chosen to be less than ambient pressure. The reserve volume of pressurized gas preferably prevents inversion of the air spring a first time when the trailer is lifted and loaded onto a ship or railcar, and a second time when the trailer is lifted and unloaded the ship or rail car.

As explained above, whether or not the piping of the air suspension is sealed off has little effect on rapid changes in pressure and volume of the gas in the main chamber due to an unloading of the axle due to lifting of the trailer. At least the piping not being sealed off does not allow air to enter the main chamber rapidly enough to prevent inversion of the air spring. It will be appreciated, however, that in case the piping is not sealed off the amount of pressurized gas that needs to be stored in the reserve chamber may be less than the amount of pressurized gas that needs to be stored in the reserve chamber in case the piping is sealed off. This can be due to an additional amount of gas entering the main chamber via the inlet and the piping during extension of the air spring. This additional amount of gas then need not be provided by the reserve chamber.

It is advantageous to know the maximum volume of a fully extended air spring as this relates to the moment when the air spring, disconnected from a pressurized gas supply system, is at it lowest pressure. This maximum volume is also directly related to the volume and pressure of the pressurized gas necessary to prevent an air spring from inverting when the main chamber of the air spring is fully extended, i.e. worst case scenario.

It is desirable that the air spring is arranged for preventing the inversion of a fully extended air spring at least twice while not being connected to a pressurized gas system. As described above, such an air spring would prevent inversion when a trailer was lifted onto and off of a transport platform without the air spring being connected to a pressurized gas system.

Due to the known relationship between pressure and volume some freedom exists in selecting the pressure of the reserve pressurized gas stored, and selecting the volume of the reserve chamber of the air spring such that the air spring is arranged to prevent air spring inversion of a fully extended air spring at least twice from a single charge of the reserve chamber. In some applications the volume of the reserve chamber may be limited by a size of the piston, or the pressure of the reserve pressurized gas may be limited by a material of the piston or reserve chamber.

Without wishing to be bound by any theory, optionally, the air spring is arranged for storing a pressurized gas in the reserve chamber, wherein a relationship of a volume of the reserve chamber and a pressure of the to be stored pressurized gas is determined by

$$P_{Reserve}V_{Reserve} \geq P_{Prevent}V_{Reserve} + 2\left(P_{Prevent}V_{Extended} - P_{Begin}V_{Begin}\right) - \delta$$

$P_{Reserve}$ is the pressure of the pressurized gas to be stored in the reserve chamber of the air spring prior to preventing air spring inversion. $V_{Reserve}$ is the volume of the reserve chamber of the air spring. It will be appreciated that the product $P_{Reserve}V_{Reserve}$ determines the gas charge of the reserve chamber, i.e the amount of gas stored in the reserve chamber. $P_{Begin}$ is a begin pressure of the pressurized gas in the main chamber of the air spring before the air spring is extended. Depending on the begin condition, the begin pressure may be a nominal, loaded, working pressure of the pressurized gas in the main chamber of the air spring. It is also possible that the begin pressure of the pressurized gas in the main chamber of the air spring is substantially equal to the ambient pressure outside the air spring and outside the flexible member. $V_{Begin}$ is a begin volume of the main chamber of the air spring. Depending on the begin condition, the begin volume may be a nominal, loaded, working volume of the main chamber of the air spring. It is also possible that the begin volume of the main chamber of the air spring is the volume of the main chamber when the air spring is fully compressed. When the air spring is fully compressed, the mounting plate of the air spring may rest on the piston of the air spring. Generally, a bump stop is provided such that the air spring may be fully compressed without damaging the components of the air spring. $V_{Extended}$ is the maximum volume of the main chamber of the air spring when fully extended. $P_{Prevent}$ is the pressure of the pressurized gas in the main chamber necessary to prevent air spring inversion, when the air spring is extended, for example unloaded. Herein $P_{Prevent}$ can e.g. be chosen to be equal to ambient pressure. For simplicity $P_{Prevent}$ can e.g. be chosen at a predetermined absolute pressure such as 1 bar. As trailers are towed all around the world at different elevations (hence different ambient pressures), for simplicity, $P_{Prevent}$ can be chosen at a predetermined absolute pressure including a safety margin, e.g. at 1.03 bar. It will be appreciated that $P_{Reserve}$ is chosen to be higher than $P_{Prevent}$. The term $\delta$ represents the additional amount of gas ($p \times V$) that enters the main chamber via the inlet and the piping if left un-sealed. It will be appreciated that $\delta$ can be determined by experiment. It will be clear that $\delta$ can be chosen to be equal to 0, e.g. if unknown or in order to provide a safety margin.

An air spring disconnected from a pressurized gas system, can be considered to be a closed system. In the case that the pressurized gas system is disconnected, but not sealed off, the air spring may still be considered to be a closed system for relatively fast changes in pressure and volume, for example, when the air spring extends due to the axle being unloaded as the road vehicle is lifted by a hoisting device, such as a crane. The resistance of the piping of the air suspension system, caused by the length of the piping and the typically small cross-section of the piping, is sufficiently large such that the connection of the piping to the ambient environment has little effect on the volume and pressure of the air spring while the road vehicle is lifted. The period of time that the axle is unloaded, from the moment that the road vehicle is lifted to the moment that the load is reapplied, is relatively short. Furthermore, the temperature of the pressurized gas of the main chamber and the reserve chamber of an working air spring is substantially equal to the temperature of the pressurized gas of the main chamber and the reserve chamber of an extended air spring. Moreover, any temperature fluctuations that do occur during use, tend to occur slowly over time, and for the purpose of this calculation can be considered negligible. Therefore, one may apply Boyle's law for determining the pressure and volume of an extended air spring from the nominal pressure and volume of a working air spring. The following formula holds.

$$P_{Begin}V_{Begin} = P_{Extended}V_{Extended}$$

It will be clear to the skilled person that with the above relationship substitutions can be made in the formula governing the relationship between the pressure and volume of the reserve pressurized gas. In this way the pressure and volume of the reserve pressurized gas can be chosen according to parameters known in a specific application.

Optionally, $P_{Prevent}$ is greater than or equal to the ambient pressure outside the air spring, and preferably $P_{Prevent}$ is equal to the ambient pressure outside the air spring.

Optionally, the reserve chamber has a volume and a pressure rating sufficient to store an amount of pressurized gas required for preventing air spring inversion, preferably of an air spring fully extending e.g. from a fully compressed situation at ambient pressure. The volume of the amount of pressurized gas is substantially equal to the volume of the reserve chamber. The pressure rating of the reserve chamber is a minimum maximum pressure at which an amount of pressurized gas having a volume substantially equal to the volume of the reserve chamber can be stored in the reserve chamber without damaging or deforming the reserve chamber. In order to prevent damage or deformation to the reserve chamber the pressure of the amount of pressurized gas stored in the reserve chamber is chosen to be less than or equal to the pressure rating of the reserve chamber.

The amount of pressurized gas, stored in the reserve chamber, having a pressure and a volume, is considered to be a single charge.

Optionally, the volume and the pressure rating of the reserve chamber is sufficient for storing an amount of pressurized gas required for preventing air spring inversion of a fully extended air spring at least twice from a single charge of the reserve chamber.

It will be appreciated that a slight modification of the formulas above may be made to determine the pressure and the volume of an amount of pressurized gas required to prevent air spring inversion once. Again, without wishing to be bound by any theory, this relationship between the volume and the pressure of the amount of pressurized gas is determined by the following formula.

$$P_{Reserve}V_{Reserve} \geq P_{Prevent}V_{Reserve} + \left(P_{Prevent}V_{Extended} - P_{Begin}V_{Begin}\right) - \delta$$

After determining the volume and the pressure of the amount of pressurized gas, a volume and pressure rating of the reserve chamber may be chosen for the specific application. Optionally, a safety margin may be taken in account when determining the volume and pressure rating of the reserve chamber. Optionally, it may be desirable to select the pressure and volume of the amount of pressurized gas such that air spring inversion may be prevented twice from a single charge of the reserve chamber.

Optionally, the at least one valve is arranged to selectively open when the pressure in the main chamber is greater than a second predetermined threshold resulting in an outflow of gas from the main chamber into the reserve chamber. The second predetermined threshold can be chosen to indicate an overpressure in the main chamber relative to the reserve chamber. When the pressure in the main chamber is greater than the pressure in the reserve chamber, the at least one valve is opened to allow the pressurized gas in the main chamber at an overpressure relative to the reserve chamber to flow from the main chamber to the reserve chamber, thus filling and/or maintaining the pressurized gas in the reserve chamber. The resulting air spring is self-contained.

Optionally, the single charge of the reserve chamber is arranged to be filled with pressurized gas from the main chamber by selectively opening the at least one valve when the pressure in the main chamber is greater than the second predetermined threshold resulting in an outflow of gas from the main chamber into the reserve chamber.

Alternatively, or additionally, the reserve chamber is provided with a second inlet arranged to be in fluid communication with a pressurized gas supply system. If desired the pressurized gas in the reserve chamber can be refilled and/or maintained by a pressurized gas supply system.

In the event of a sudden drop in pressure in the main chamber, indicating that the air spring is susceptible to inversion, a pressure difference exists between the main chamber and the reserve chamber. Then, the selectively opening of the at least one valve results in the flow of pressurized gas from the reserve chamber into the main chamber.

Optionally, the second predetermined threshold is one of a predetermined pressure difference between the reserve chamber and the main chamber, a predetermined absolute pressure in the reserve chamber, a predetermined absolute pressure in the reserve chamber, and a predetermined relative pressure. If the predetermined threshold is an absolute pressure in the reserve chamber, then if the pressure in the reserve chamber has dropped below an absolute pressure indicating that the reserve chamber is no longer able to provide an injection of pressurized gas capable of preventing the air spring from inverting, the at least one valve is selectively opened resulting in the flow of pressurized gas from the main chamber to the reserve chamber. This injection of pressurized gas ensures the reserve chamber is capable of preventing the air spring from inverting. The relative pressure may be an offset from the pressure in the reserve chamber and/or the main chamber, i.e. a constant plus the pressure in the reserve chamber. It is also conceivable that the relative pressure is a product of the pressure in the reserve and/or main chamber, i.e. a constant multiplied by the pressure in the reserve chamber. It may be desirable to keep the gas in the reserve chamber at a reference pressure, e.g. a nominal working pressure of the air spring. In this case if the pressure in the main chamber rises above the reference pressure in the reserve chamber, indicative of an overpressure, the at least one valve can be selectively opened so that pressurized gas can flow from the main chamber into the reserve chamber thus replenishing the supply of pressurized gas in the reserve chamber.

Optionally, the at least one valve includes a first valve, such as a check valve, arranged to selectively open if the pressure in the main chamber is less than the first predetermined threshold. Optionally, the at least one valve includes a second valve, such as a check valve, arranged to selectively open if the pressure in the main chamber is greater than the second predetermined threshold. Optionally, the first valve is one of a ball check valve, a split disc check valve and a diaphragm check valve. Optionally, the second valve is one of a ball check valve, a split disc check valve and a diaphragm check valve. Check valves, also referred to in the art as non-return valves or one-way valves, are commercially available in a wide range of sizes, are simple, and relatively inexpensive. Furthermore, check valves are very well suited for implementing a predetermined pressure difference. The at least one valve is implemented as a servo-system including a sensor and an opening element,

The at least one valve includes a membrane as pressure sensitive element. The membrane has a first side and an opposite second side. The first side of the membrane is in fluid communication with an environment outside the air spring such that the pressure exerted on the first side of the membrane is substantially equal to an ambient pressure outside the air spring. The second side of the membrane is in fluid communication with the main chamber of the air spring such that the pressure exerted on the second side of the membrane is substantially equal to the pressure in the main chamber of the air spring. The membrane, acting as a pressure sensitive element, is arranged for actuating an opening element for selectively opening a fluid channel between the reserve chamber and the main chamber if the pressure in the main chamber is less than a first predetermined pressure relative to the ambient pressure.

In this way, the membrane and the opening element act as a mechanical servo-system, wherein the membrane is the sensor. The membrane may be chosen to be sensitive to small pressure difference between the pressure in the main chamber and the ambient pressure outside the air spring and outside the flexible member. The membrane provides a frictionless comparison of the ambient pressure and the pressure in the main chamber of the air spring.

Optionally, the membrane is arranged for actuating an opening element for selectively closing off the fluid channel if the pressure in the main chamber is greater than a third predetermined threshold. In this way some pressurized gas remains in the reserve chamber. Preferably, this remaining reserve gas is pressurized and has a pressure higher than the ambient pressure outside the air spring.

Optionally, the third predetermined threshold is a predetermined relative pressure relative to the ambient pressure. Optionally, the third predetermined threshold is substantially equal to the ambient pressure outside the air spring and out side the flexible member. Optionally, the third predetermined threshold is an overpressure, i.e. the pressure inside the main chamber is greater than the ambient pressure. Selecting the third predetermined threshold to be substantially equal to ambient pressure, or greater than ambient pressure provides a good indication that the air spring is no longer susceptible to inversion.

Optionally, the opening element is biased in a closed position. In this way, the membrane actuates the opening element to open by exerting an actuating force on the opening element. The opening element is closed when the actuating force is removed by the membrane. It is noted that removing the actuating force applied to a biased opening element is also considered to be actuating.

Optionally, the first valve includes a rigid element arranged for transferring an actuating motion from the membrane to the opening element. Depending on a material of the membrane, a rigid element may be used to transfer the actuating motion of the membrane to the opening element. The rigid member may be a ring. The rigid member may be attached to the membrane by an adhesive. Depending on the first valve, the rigid member may simply rest, free of adhesive, between the membrane and the opening element.

Optionally, the opening element is at least one Schrader valve including an actuating pin arranged for being actuated by the membrane for selectively opening and closing the fluid channel. The opening element of the first valve can include one or more Schrader valves including an actuating pin arranged for being actuated by the membrane and selectively opening and closing a fluid channel between the reserve chamber and the main chamber. Optionally, the Schrader valve is biased in a closed position. Additionally, the Schrader valve may be biased to a closed position when the reserve chamber is pressurized. The membrane is arranged for actuating the Schrader valve and selectively opening the fluid channel if the pressure in the main chamber is less than a first predetermined pressure relative to the ambient pressure and selectively closing off the fluid channel if the pressure in the main chamber is greater than a third predetermined threshold. It will be appreciated that herein the term Schrader valve is used to generally refer to valves of the type of pneumatic tire valves typically used on automobiles.

In this case the third predetermined threshold is a pressure relative to the ambient pressure. Optionally, the third predetermined threshold may be chosen to be substantially equal to the ambient pressure. Advantageously, in use, the membrane flexes away from the actuating pin of the Schrader valve due to the pressure difference between the main chamber and the ambient air. Therefore the Schrader valve is prevented from opening due to vibrations, and/or slight variations in road conditions. On the other hand, if the pressure in the main chamber decrease the membrane settles close to, or abutting against, the actuating pin of the Schrader valve such that a small underpressure can trigger an opening of the first valve.

Optionally, the Schrader valve of the first valve is threadably mounted to the air spring such that a distance from the actuating pin to the membrane is adjustable, and wherein adjusting the distance from the actuating pin to the membrane results in the adjustment of the first predetermined threshold. In this way, the first predetermined threshold can be adjusted for the present embodiment.

Optionally, the first side of the membrane is in fluid communication with an environment outside the air spring through a flow limiting valve arranged for preventing a substantial flow of pressurized gas resulting from a puncture or tear in the membrane. In this way if the membrane were to be punctured or torn, the flow limiting valve would close and the air spring would not completely deflate. This is a failsafe mechanism. In a disclosed example not according to the invention, the first valve includes a fluid channel between the reserve chamber and the main chamber provided with a resilient element. The resilient element is arranged to flex between a first position and a second position. In the first position the resilient element is arranged to selectively close off the fluid channel, and in the second position the resilient element is arranged to selectively open the fluid channel.

Optionally, the resilient element has a non-linear spring characteristic. Optionally the resilient element has a degressive spring characteristic, i.e. the spring constant decreases with increasing deflection from the first position. As a result, the resilient element transitions quickly between from the first position to the second position. These characteristics make the resilient element ideal for use in the first valve. When the resilient element is in the first position, the first valve is fully closed. If the air spring is in immediate danger of inverting the resilient element quickly flexes from the first position to the second position allowing pressurized gas to flow from the reserve chamber to the main chamber.

Optionally, the first valve further includes a sealing member. In the first position the resilient element is arranged to abut against the sealing member forming a substantially gastight seal. Incorporating a sealing member helps ensure that in the first position, the fluid channel between the reserve chamber and the main chamber is selectively closed off in a substantially gastight fashion.

Optionally, in the second position the resilient element is arranged to be remote to the sealing member resulting in an inflow of gas from the reserve chamber through the fluid channel to the main chamber.

Optionally, the resilient element has a truncated cone shape and the inner edge forms a first circle and the outer edge forms a second circle. Optionally, the diameter of the second circle is larger than the diameter of the first circle. The height of the truncated cone and the difference in diameters contribute to the size of the opening created when the resilient element flexes from the first position to the second position. If a larger opening is created, the pressurized gas can flow more easily from the reserve chamber to the main chamber. Optionally, the resilient element is a Belleville spring. The properties of the Belleville spring, such as degressive spring characteristic and/or dimensions, may be chosen on the basis of the properties of the air spring, i.e. size and material. It is also conceivable that the properties of the Belleville spring may be chosen on the basis of the specific application of the air spring, i.e. gross trailer weight and expected road conditions. The shape and size of the Belleville spring affects the opening created when the Belleville spring flexes from the first position to the second position. Additionally, the force required for the Belleville spring to flex can be chosen in accordance with the first predetermined threshold.

Optionally, the first valve further includes an insert adjustably received in the first valve. The insert is arranged to exert a force on the resilient element thereby allowing adjustment of the first predetermined threshold. Optionally, the first valve is provided with screw threads arranged to interact with screw threads provided on the insert. Alternatively, a lock and click system may be used.

Optionally, the second valve is incorporated in the insert. By incorporating the second valve in the insert, a simple yet functional valve is created that fulfills all of the requirements of the at least one valve. In a disclosed example not according to the invention, the first valve includes a fluid channel between the reserve chamber and the main chamber, and a plunger having a first side and an opposite second side. The first side of the plunger is in fluid communication with an environment outside the air spring such that the pressure exerted on the first side of the plunger is substantially equal to an ambient pressure outside the air spring. The second side of the plunger is in fluid communication with the main chamber of the air spring such that the pressure exerted on the second side of the plunger is substantially equal to the pressure in the main chamber of the air spring. The plunger is arranged to selectively open the fluid channel if the pressure in the main chamber is less than a first predetermined pressure measured relative to the ambient pressure. The plunger may also be arranged to selectively close off the fluid channel if the pressure in the main chamber is greater than the third predetermined pressure measured relative to the ambient pressure.

With the first side of the plunger in fluid communication with the ambient environment outside the air spring and outside the flexible member, it becomes very easy to selectively open the first valve when an underpressure occurs in the main chamber relative to the ambient pressure outside the air spring and outside the flexible member. As mentioned above, the underpressure in the main chamber, i.e. the pressure in the main chamber being less that the ambient pressure outside the air spring and outside the flexible member, provides a reliable indication that the air spring is in danger of inverting. The underpressure triggering the opening of the first valve may e.g. be 0.05 bar.

The plunger selectively opens and closes the fluid channel between the main chamber and the reserve chamber. It is conceivable that the plunger has associated therewith other means that cooperate with the plunger to selectively open and close off the fluid channel as the plunger is moved by a pressure difference.

Optionally, the plunger is provided with one or more sealing members. Optionally, the sealing member is an o-ring. This improves the seal and increases the friction between the plunger and a surrounding housing and helps prevent the first valve from inadvertently opening due to accelerations, jolts, and/or vibrations since air springs are commonly mounted on vehicle axles subject to such disturbances.

Optionally, the plunger is biased in a position that selectively closes off the fluid channel by a resilient member. This requires that a slight underpressure relative to the ambient pressure needs to occur before the first valve will selectively open. Additionally, this also helps prevent the first valve from opening due to accelerations, jolts, and/or vibrations.

The surface area of plunger can be chosen to be large enough such that the valve is sensitive to small underpressures in the main chamber relative to the ambient pressure outside the air spring and outside the flexible member. Additionally, the fluid channel between the reserve chamber and the main chamber can be chosen to be sufficiently large to ensure that the gas flowing from the reserve chamber through this channel to the main chamber meets negligible flow resistance. Therefore the flow of gas from the reserve chamber to the main chamber can be chosen to be sufficient to prevent the air spring from inverting. These and other parameters that influence the performance of the air spring could be chosen while keeping in mind the specific application of the air spring, i.e. gross trailer weight and expected road conditions.

According to the invention there is also provided a method for preventing air spring inversion comprising the steps of: providing an air spring including a mounting plate, a flexible tubular member, and a piston forming a substantially gastight main chamber; providing a substantially gastight reserve chamber mounted directly to or adjacent to one of the mounting plate and the piston; providing a fluid communication connection between the reserve chamber and the main chamber through at least one valve; and selectively opening the at least one valve if the pressure in the main chamber is less than a first predetermined threshold resulting in an inflow of gas from the reserve chamber to the main chamber.

This provides a reliable method for preventing air spring inversion. The first predetermined threshold is chosen as described above. Optionally, the method further comprises the step of filling the reserve chamber with pressurized gas by selectively opening the at least one valve when the pressure in the main chamber is greater than a second predetermined threshold resulting in an outflow of gas from the main chamber to the reserve chamber. This provides an efficient solution for maintaining a reserve pressure in the reserve chamber.

Alternatively, or additionally, the method further comprises the step of providing pressurized gas from a gas supply system to the reserve chamber via a second inlet in fluid communication with the pressurized gas supply system.

Optionally, the first predetermined threshold is lower than the ambient pressure outside the air spring and outside the flexible member. Optionally, the first predetermined threshold is 0.05 bar, or more, less than the ambient pressure outside the air spring. Optionally, the method further includes the step of selectively closing the at least one valve if the pressure in the main chamber is greater than or equal to a third predetermined threshold relative to the ambient pressure outside the air spring and outside the flexible member. In this way the air spring is prevented from inverting, yet an amount of pressurized gas remains in the chamber for use for preventing a subsequent air spring inversion.

Optionally, the method further includes the step of: storing, in the reserve chamber having a volume and a pressure rating, an amount of pressurized gas required for preventing air spring inversion. The volume of the amount of pressurized gas is substantially equal to the volume of the reserve chamber, and the pressure of the amount of pressurized gas is less than or equal to the pressure rating of the reserve chamber.

Therefore the volume of the reserve chamber and the pressure rating of the reserve chamber are selected such that the amount of pressurized gas, capable of being stored in the reserve chamber, is sufficient for preventing inversion of the air spring.

Optionally, the method includes preventing air spring inversion of a fully extended air spring at least twice from a single charge of the reserve chamber, i.e. without in the mean time refilling the reserve chamber. In this case, the amount of pressurized gas, capable of being stored in the reserve chamber having a given volume and pressure rating, is sufficient for preventing inversion of a fully extended air spring at least twice. This is beneficial when the air spring is disconnected from a pressurized gas supply system. Preventing at least two subsequent air spring inversions while being disconnected from a pressurized gas supply is desirable as trailers are disconnected from a pressurized gas supply system while being loaded and unloaded from ships and rail cars. Once the air spring is reconnected to a pressurized gas supply system, the reserve chamber may be refilled with pressurized gas, when an overpressure occurs in the main chamber.

Optionally, the method further comprising the step of filling the single charge of the reserve chamber with pressurized gas from the main chamber by selectively opening the at least one valve when the pressure in the main chamber is greater than the second predetermined threshold resulting in an outflow of gas from the main chamber to the reserve chamber. This provides an efficient solution for maintaining a filling the single charge of pressurized gas in the reserve chamber.

Optionally, the method further includes the step of providing a pressurized gas in the reserve chamber such at a pressure of the pressurized gas and in a volume of the reserve chamber such that the following relationship is satisfied.

$$P_{Reserve}V_{Reserve} \geq P_{Prevent}V_{Reserve} + 2\left(P_{Prevent}V_{Extended} - P_{Begin}V_{Begin}\right) - \delta$$

Here $P_{Reserve}$ is the pressure of the pressurized gas in the reserve chamber of the air spring, $V_{Reserve}$ is the volume of the reserve chamber of the air spring, $P_{Begin}$ is a begin pressure of the pressurized gas in the main chamber of the air spring, $V_{Begin}$ is a begin volume of the main chamber of the air spring, $V_{Extended}$ is the maximum volume of the air spring when fully extended, and $P_{Prevent}$ is the pressure in the main chamber necessary to prevent air spring inversion, when the air spring is extended. The term $\delta$ represents the additional amount of gas that enters the main chamber via the piping if left un-sealed. It is noted that the begin pressure and volume of the pressurized gas in the main chamber is the pressure and volume of the pressurized gas in the main chamber before the air spring is extended. This may be a, nominal, working pressure and working volume if the air spring is in a pressurized working state, i.e. the air spring is connected to a pressurized gas system or the piping of the air suspension system is sealed off. The begin pressure may alternatively be equal to the ambient pressure outside the air spring and outside the flexible member if the air spring is disconnected from the pressurized gas system and the pressurized gas system is not sealed off. In this case, the air spring is fully compressed, and the begin volume corresponds to the fully compressed volume. The air spring may include a bump stop, which is generally a solid molded rubber device, used to prevent damage to the air spring when the air spring is not connected to a pressurized gas supply system. When the air spring is fully compressed, the air spring generally rests on the bump stop.

According to the invention there is also provided a suspension system including, a pressurized gas supply system and one or more air springs according to invention. The pressurized gas supply system is connected to the inlets of the one or more air springs. Optionally, the suspension system further includes a controller arranged to regulate the pressure of the gas of the pressurized gas supply system supplied to the one or more air springs.

Also disclosed is a modification kit of parts for modifying an existing air spring. The existing air spring includes a mounting plate, a flexible tubular member and a piston. The flexible tubular member, the mounting plate and the piston form a substantially gastight main chamber. The air spring can be provided with an inlet arranged to be in fluid communication with a pressurized gas supply system. The modification kit of parts comprises a substantially gastight reserve chamber arranged to be directly mounted to or adjacent to one of the mounting plate and the piston. The substantially gastight reserve chamber is arranged to be in fluid communication with the main chamber through at least one valve. The at least one valve is arranged to selectively open if the pressure in the main chamber is less than a first predetermined threshold resulting in an inflow of gas from the reserve chamber to the main chamber. This modification kit allows an existing air spring to be easily converted into an air spring according to the invention.

According to the invention there is also provided a system comprising a road vehicle including an air spring according to the invention, and a hoisting device arranged for hoisting the road vehicle. Advantageously, as the road vehicle includes an air spring according to the invention, when the road vehicle is hoisted by the hoisting device, inversion of the air spring is prevented.

BRIEF DESCRIPTION OF THE DRAWINGS

The invention will now be further elucidated by means of non-limiting examples referring to the drawings, in which

Figure 1 is a schematic side view of an air spring suspension system;
Figure 2 is a schematic cross section of an air spring according to a first example not according to the invention;
Figure 3 is a schematic cross section of a compressed air spring according to a first example;
Figure 4 is a schematic cross section of an extended air spring according to a first example;
Figure 5 is a schematic cross section of an air spring according to a second example not according to the invention;
Figure 6 is a schematic cross section of an air spring according to a third example not according to the invention;
Figure 7 is a schematic cross section of an air spring according to a fourth example not according to the invention;
Figure 8 is a schematic cross section of an air spring according to a first embodiment accordingto the invention;
Figure 9 is a schematic cross section of an example of a Schrader valve; and
Figure 10 is a schematic cross section of an air spring according to the first embodiment.

DETAILED DESCRIPTION

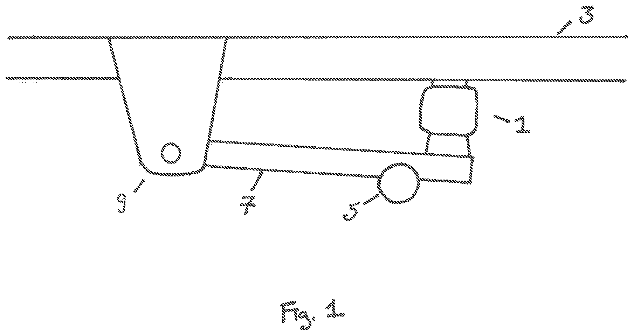

Figure 1 shows a schematic side view of an air spring suspension system. In this example the system includes a chassis 3, such as a chassis of a trailer. The system further includes an axle 5 to which wheels (not shown) of the trailer are mounted. The axle 5 is mounted to a trailing arm 7, which is mounted to the chassis 3 via a pivot point 9. Between the trailing arm 7 and the chassis 3 an air spring 1 is mounted.

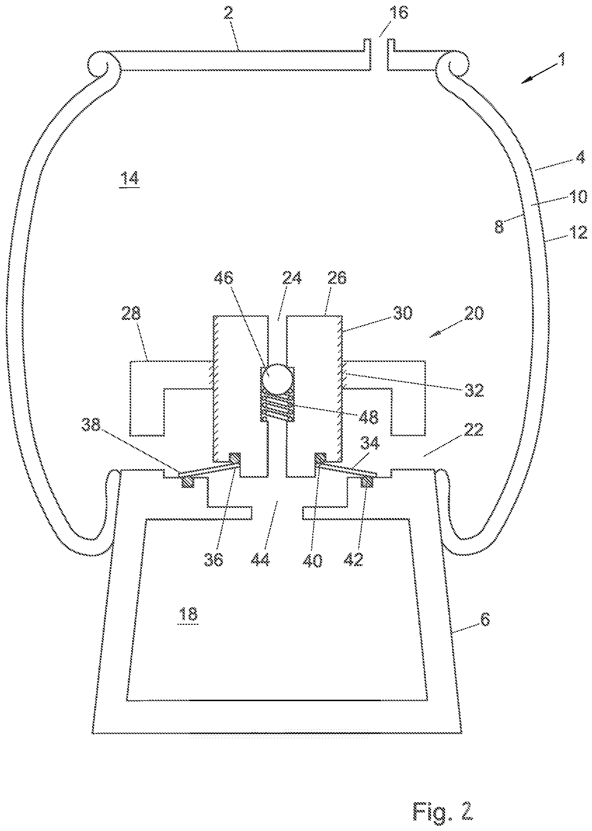

In Figure 2 a cross section of an air spring 1 according to a first example not according to the invention is shown. Air spring 1 comprises a mounting plate 2, a flexible tubular member 4, and a piston 6. In this example the flexible tubular member includes three layers, although this is not essential. The three layers include an inner liner 8, an inner layer 10, and an outer liner 12. The inner liner 8 and outer liner 12 are made from a rubber material. The inner layer 10 is made from reinforced fabric. A layered construction is considered to be conventional.

The mounting plate 2 is crimped onto the flexible tubular member 4. The flexible tubular member is attached to the piston 6. Therefore the mounting plate 2, the flexible tubular member 4, and the piston 6 form a substantially gastight main chamber 14.

The air spring 1 is further provided with an inlet 16, which is in fluid communication with a pressurized gas supply system. In this example the pressurized gas is air. The pressurized gas supply system is not shown, but is considered conventional.

A substantially gastight reserve chamber 18 is directly mounted to piston 6, and is in fluid communication with the main chamber 14 through a valve 20. In this example the substantially gastight reserve chamber 18 is completely internal to the piston 6, and extends inside the contour of the flexible member 4. In this example, the valve 20 includes a first check valve 22 and a second check valve 24. Here, the second check valve 24 is incorporated in an insert 26. The insert 26 is received by support 28 of valve 20 by means of screw threads 32 of the support 28 and mating screw threads 30 of insert 26. The screw threads 30 and 32 are arranged to interact and to hold the insert 26 in place, thus allowing insert 26 to exert a force on a resilient element 34 of first check valve 22.

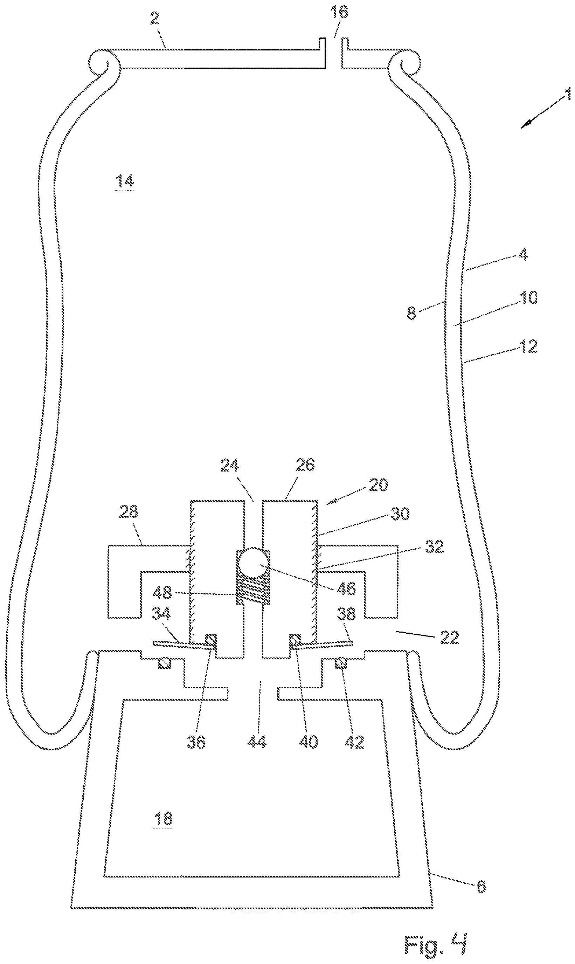

In Figure 2 the resilient element 34 is in a first position selectively closing off a fluid channel 44 between the reserve chamber 18 and the main chamber 14. In this example, the resilient element 34 has an inner edge 36 and an outer edge 38. In this example the resilient element 34 is a Belleville spring. The inner edge 36 forms a first circle having a first diameter and the outer edge 38 forms a second circle having a second diameter. In this example the second diameter of the second circle is larger than the first diameter of the first circle. In this example, the resilient element 34 has a degressive spring characteristic. Hence, incrementally less force (or pressure) is required for further deflecting the resilient element 34 from the first position towards a second position in which the first valve 22 is fully opened. The first position is depicted in Figure 2. The second position is depicted in Figure 4.

The first check valve 22 further includes a first sealing member 40, in this example an o-ring, and a second sealing member 42, in this example an o-ring. When the resilient element 34 is in the first position, as depicted in Figure 2, the inner edge 36 of the resilient element 34 abuts against the first sealing member 40 forming a substantially gastight seal, and the outer edge 38 of the resilient element 34 abuts against the second sealing member 42 forming a substantially gastight seal. The substantially gastight seals formed by the resilient element 34 and the first and second sealing member 40, 42 seal off the fluid channel 44 between the reserve chamber 18 and the main chamber 14 in a substantially gastight fashion.

In this example valve 20 selectively opens when the pressure in the main chamber 14 is less than a first relative pressure. In this example, the first relative pressure is measured relative to the pressure in the reserve chamber 18, i.e. the pressure in the reserve chamber 18 minus a first constant pressure value. The first predetermined relative pressure is defined by the spring characteristic of the resilient element 34 and by the amount of force exerted by insert 26 on the inner edge 36 of the resilient element 34. Insert 26 is adjustably received in support 28. As more force is exerted by insert 26 on the resilient element 34, less of a pressure difference between the reserve chamber 18 and the main chamber 14 is required to flex the resilient element away from the first position.

The resilient element 34 transitions quickly between the first position and the second position. The time spent by the resilient element 34 transitioning is considered to be negligible.

In this example valve 20 also includes the second check valve 24, which is a ball check valve including a ball 46 and a resilient member 48, in this example a spring. In this example, the second check valve 24 is arranged to open if the pressure in the main chamber 14 is greater than a second predetermined relative pressure. In this example the second relative pressure is measured relative to the pressure in the reserve chamber 18, i.e. the pressure in the reserve chamber 18 plus a second constant pressure value. In other words the second predetermined relative pressure is indicative of an overpressure in the main chamber 14 relative to the reserve chamber 18. The second predetermined relative pressure is defined by the properties of the ball 46 and spring 48.

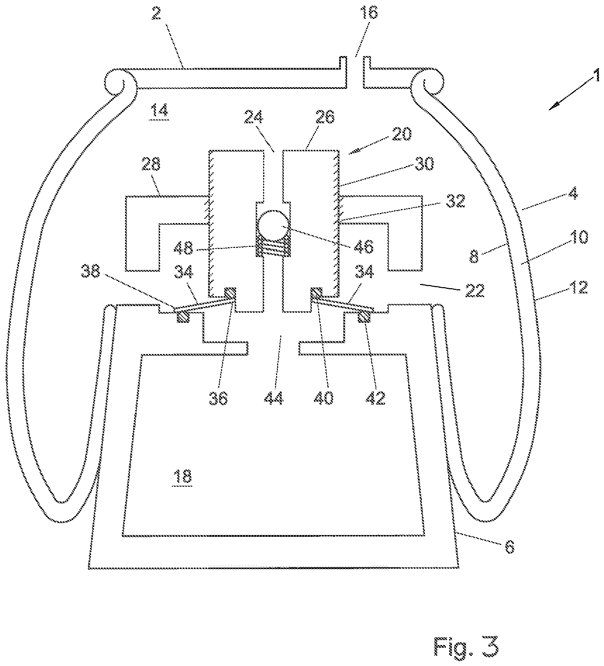

Typically, air spring 1 is used in an air suspension system of a trailer. The air suspension system includes a pressurized gas supply system and a controller. In this example the gas is air. Both the controller and pressurized gas supply system are not pictured, but considered conventional. The air spring 1 is supplied with pressurized air from the pressurized gas supply system via inlet 16. While the pressurized gas supply system is powered and connected to the air spring 1, the controller ensures that the pressure in air spring 1 is appropriate for the current application. Figure 3 shows a compressed air spring 1. If an overpressure occurs in the main chamber 14, and the pressure in the main chamber 14 is greater than the second predetermined relative pressure, the second check valve 24 of valve 20 selectively opens, as depicted in Figure 3, allowing pressurized air to flow from the main chamber 14 into the reserve chamber 18. An overpressure may occur when the air spring 1 compresses. For example when the trailer drives over a bump in the road. After the air spring 1 has been compressed it will generally again expand, and the pressurized gas supply system and controller will bring the back to the nominal working pressure. This is a simple and reliable method for filling and maintaining the pressurized air in the reserve chamber 18. Air spring 1 is completely self-contained. Alternatively, or additionally, the reserve chamber 18 itself may be provided with a second inlet arranged to be in fluid communication with the pressurized gas supply system, e.g. via a third check valve for providing the pressure in the reserve chamber 18.

When the trailer arrives at a distribution center, and the trailer is parked it is generally disconnected from the pressurized gas supply system which often is part of a tractor vehicle such as a road truck. The trailer may then be moved by a yard truck. As the yard truck typically has a towing height different from a road truck, an operator will jack up the trailer. This causes the air spring 1 to extend, shown in Figure 4. If the operator does not power, or does not connect the pressurized gas supply system, the pressure in the main chamber 14 will drop as the volume of the main chamber 14 increases as a result of the air spring 1 extending.

If the pressure in the main chamber 14 drops too low, the flexible member 4, which typically has a convex shape, as shown in Figure 2, may become concave, as shown in Figure 4. The pressure may continue to drop due to the operator jacking the trailer up higher, or from for example the trailer driving over a pothole. When the flexible member 4 has a concave shape the air spring 1 may be damaged when load is further applied or reapplied to the air spring 1. For example, the trailer drives over a pothole causing the air spring 1 to extend and have a concave shape, and then back onto a smooth road surface causing the air spring 1 to compress and reapply the load of the trailer on a concave air spring.

This potentially damaging situation is avoided because air spring 1 is equipped with the first check valve 22 of valve 20. If the pressure in the main chamber 14 is less than the first predetermined relative pressure, as depicted in Figure 4, the resilient element 34 will flex away from the first position, opening the fluid channel 44 and allowing pressurized air to flow from the reserve chamber 18 to the main chamber 14. Due to the shape of resilient element 34 and its spring characteristic, the inflow of pressurized air is quick and large resulting in an increase in pressure in the main chamber 14 and a returning of the flexible member 4 to a convex shape. Now if the load is reapplied, the spring correctly rolls over the piston and is not damaged.

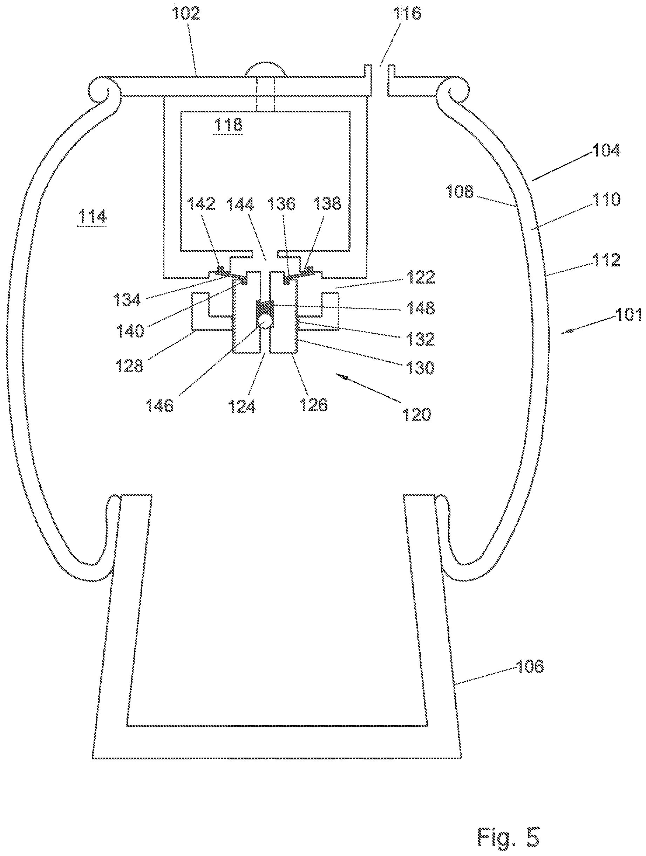

Figure 5 is a schematic cross section of an air spring according to a second example not according to the invention. Reference numerals of parts corresponding with parts in the first example will be referred to with the addition of 100 with respect to Figures 2-4. In the second the substantially gastight reserve chamber 118 of the air spring 101 is directly mounted to the mounting plate 102 and resides inside the contour of the flexible member 104. In the second example the piston 106 is hollow, allowing the reserve chamber 118 and the at least one valve 120 to be received in the hollow piston 106 if the air spring 101 is compressed (or bottoms out).

The at least one valve 102 in the second example corresponds to the at least one valve in first example. Air spring 101 is backwards compatible with conventional air springs as the reserve chamber 118 resides inside the contour of the flexible member 104. Therefore the profile of the air spring 101 including the reserve chamber 118 is (or at least can easily be made to be) substantially the same as the profile of an air spring known in the art.

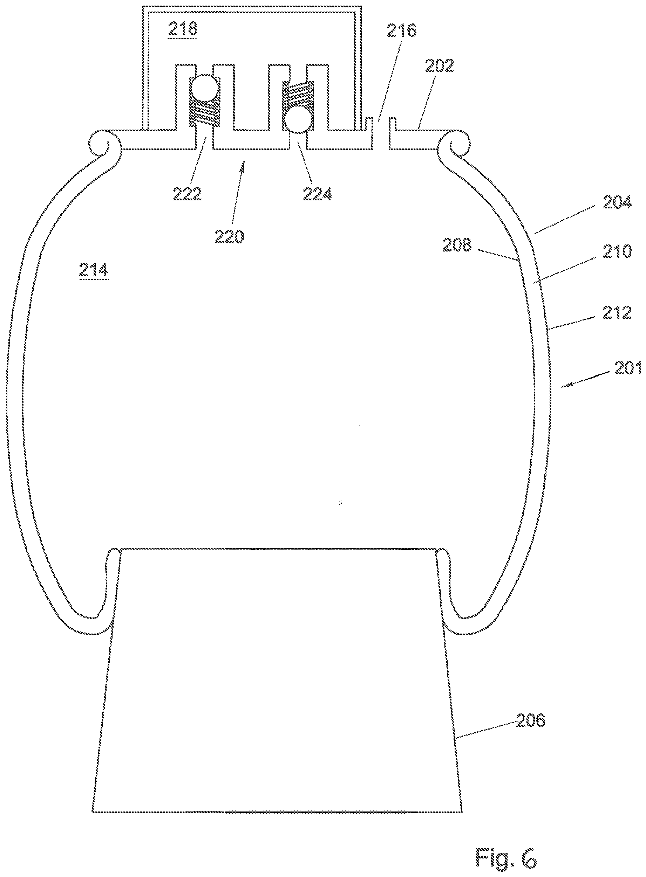

Figure 6 is a schematic cross section of an air spring according to a third example not according to the invention. Reference numerals of parts corresponding with parts in the first example will be referred to with the addition of 200 with respect to Figures 2-4. In the third the substantially gastight reserve chamber 218 is directly mounted to mounting plate 202 and resides outside the contour of the flexible member 204. In the third example the at least one valve 220 includes a first check valve 222, in this example a ball check valve, and a second check valve 224, in this example also a ball check valve.

Although the first and second check valves 222, 224 are physically different from the corresponding valves in the first and second example, the valves function in a similar fashion and can be mutually exchanged as desired. In the event of an overpressure, and the pressure in the main chamber 214 is greater than a second predetermined relative pressure, the second check valve 224 of valve 220 selectively opens. In this example, in order to prevent air spring 201 from inverting, the first check valve 222 selectively opens when the pressure in the main chamber 214 is less than a first relative pressure, which is in this example a predetermined pressure difference between the pressure in the main chamber 214 and the pressure in the reserve chamber 218, i.e. the pressure in the reserve chamber 218 minus a first constant pressure value.

The air spring 201 is retrofittable as the reserve chamber 218 resides outside the contour of the flexible member 204. Therefore an existing air spring known in the art can be easily modified to produce an air spring according to the invention. In some cases, for example in this example, it may even suffice to modify an existing mounting plate. Therefore the remainder of the production process can remain unchanged.

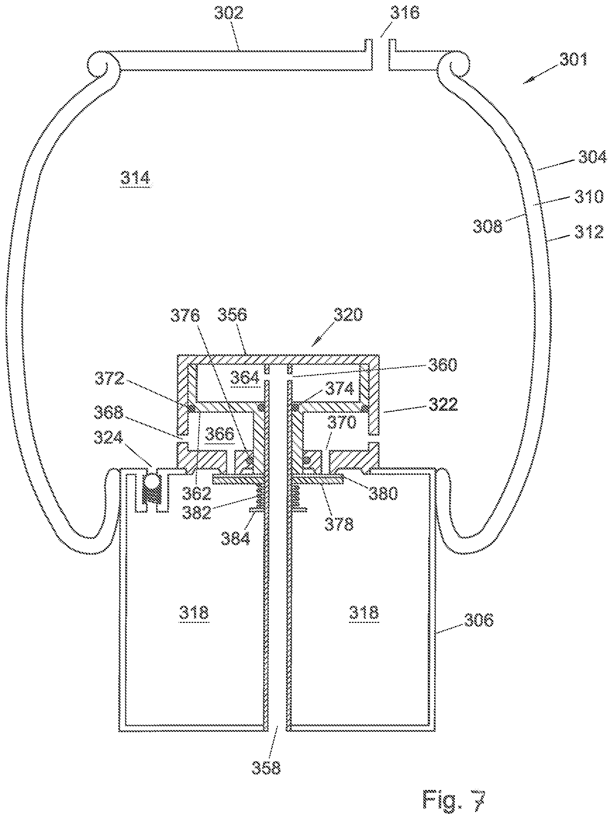

Figure 7 is a schematic cross section of an air spring 301 according to a fourth example not according to the invention. Reference numerals of parts corresponding with parts in the first example will be referred to with the addition of 300 with respect to Figures 2-4. In the third example the substantially gastight reserve chamber 318 is directly mounted to piston 306. In this example the substantially gastight reserve chamber 318 is completely internal to the piston 306, and extends inside the contour of the flexible member 304. In this example the at least one valve 320 includes a first valve 322 implemented as a plunger valve, and a second valve 324 implemented as a ball check valve.

The plunger valve 322 is in fluid communication with channel 358 through opening 360. Channel 358 is in turn in fluid communication with the ambient air outside the air spring and outside the flexible member 304. Therefore the pressure in chamber 364 above plunger 362 exerted on a first side of plunger 362 is substantially equivalent to the ambient pressure outside the air spring 301 and outside the flexible member 304. The chamber 366 under plunger 362 is in fluid communication through opening 368 with the main chamber 314. Therefore the pressure in the chamber 366 exerted on a second side of plunger 362 is substantially equivalent to the pressure in the main chamber 314. Moreover, the opening 368 is large enough to follow abrupt changes in pressure in the main chamber 314.

The plunger 362 and housing 356 are provided with o-rings 372, 374, 376 to improve the seal between the plunger 362 and the housing 356. This helps ensure that the pressure in chamber 364 is substantially equivalent to the ambient pressure outside the air spring and the flexible member, and that the pressure in chamber 366 is substantially equivalent to the pressure in the main chamber. The plunger 362 is connected to a closing member 378, which is provided with resilient, here rubber, layer 380. The closing member 378 is biased by a resilient member 382, which is supported by a protrusion 384. When the rubber layer 380 abuts against the opening 370 it selectively closes off the fluid channel from the reserve chamber 318 to the main chamber formed by opening 370, chamber 366, and opening 368.

In the absence of a pressure difference between the main chamber 314 and the ambient pressure outside of the air spring 301 and outside the flexible member 304, o-rings 372, 374, 376 provide enough friction and the resilient member 382 exerts enough force to hold the plunger 362 in place, essentially compensating for the force of gravity. Additionally, the biasing properties of the o-rings 372, 374, 376 and the resilient member 382 are responsible for preventing the plunger valve 322 from inadvertently opening due to accelerations, jolts, and/or vibrations.

The valve 324 functions in a similar fashion to the first and second examples. If an overpressure occurs in the main chamber 314, and the pressure in the main chamber 314 is greater than a second predetermined relative pressure, the second valve 324 of the valve 320 selectively opens, allowing pressurized air to flow from the main chamber 314 to the reserve chamber 318. An overpressure may occur when the air spring 301 compresses. This is a simple and reliable method for filling and maintaining the pressurized air in the reserve chamber 318. The air spring 301 is completely self-contained. Alternatively, or additionally, the reserve chamber 318 may be provided with a second inlet arranged to be in fluid communication with the pressurized gas supply system.

Although the first valve 322 is physically different from the corresponding valves in the first, second, and third example, the valves function in a similar fashion and can be mutually exchanged if desired. In this example, in order to prevent air spring 301 from inverting, the first valve 322 selectively opens when an underpressure occurs in the main chamber 314 relative to the ambient pressure outside the air spring 301 and outside the flexible member 304. As mentioned above, the actual value of the underpressure required in the main chamber to selectively open valve 322 depends on the properties of the o-ring 372, 374, 376, the resilient member 382, the plunger 362 and the closing member 378. In this example these properties are chosen such that valve 322 will selectively open resulting in an inflow of gas from the reserve chamber 318 to the main chamber 314 when a predetermined small underpressure relative to the ambient pressure outside air spring 301 and outside the flexible member 304 occurs. The valve 322 will selectively close again if the pressure in the main chamber rises. The actual pressure difference between the main chamber 314 and the ambient pressure at which the valve 322 closes again is determined by the properties of the o-ring 372, 374, 376, the resilient member 382, the plunger 362 and the closing member 378.

The surface area of plunger 362 is chosen to be large enough such that the valve 322 is sensitive to small underpressures in the main chamber 314 relative to the ambient pressure outside air spring 301 and outside the flexible member 304. Additionally, the fluid channel defined by the openings 368 and 370 and the chamber 366 can be chosen to be sufficiently large to ensure that the gas flowing from the reserve chamber 318 through to the main chamber 314 meets negligible flow resistance. Therefore the flow of gas from the reserve chamber 318 to the main chamber 314 is sufficient to prevent the air spring 301 from inverting. These and other parameters that influence the performance of the air spring could be chosen while keeping in mind the specific application of the air spring 301, i.e. gross trailer weight and expected road conditions.

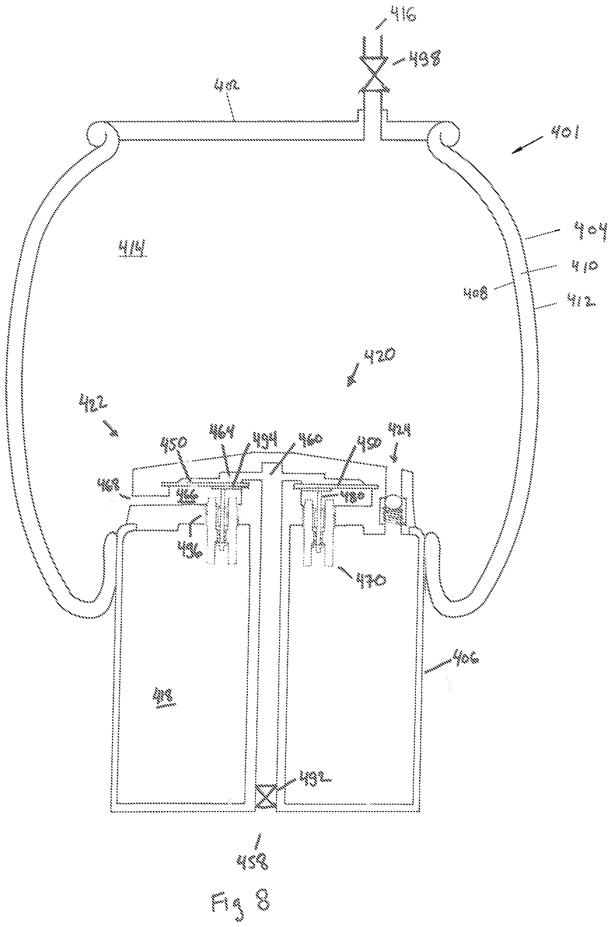

Figure 8 is a schematic cross section of an air spring 401 according to a first embodiment. Reference numerals of parts corresponding with parts in the first example will be referred to with the addition of 400 with respect to Figures 2-4. In this embodiment the substantially gastight reserve chamber 418 is completely internal to the piston 406, and extends inside the contour of the flexible member 404. In this embodiment the at least one valve 420 includes a first valve 422 implemented as a membrane 450 arranged for actuating an opening element for opening and closing a fluid channel. In this example, the opening element is a Schrader valve 470. Furthermore, a second valve 424 implemented as a ball check valve.

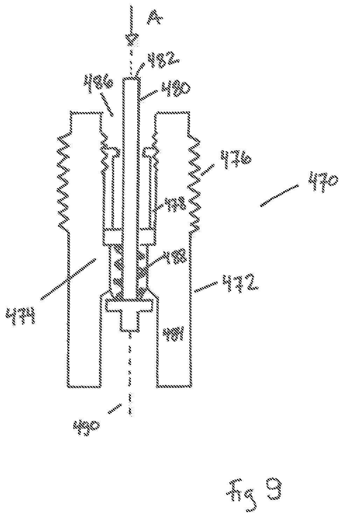

In Figure 9 the opening element, the Schrader valve 470, is shown in detail including a stem 472 and a valve core 474. Schrader valves are used abundantly in the automotive industry as pneumatic tire valves. The stem 472 is provided with screw threads 476. Furthermore, the core 474 includes a core housing 478 threadably received by the stem 472. An actuating pin 480 including an actuating surface 482 at a first end, and a stop 484 at a second end for closing off a fluid channel 486. The stop 484 of the actuating pin is biased in the closed position by a tension spring 488. When a force is applied in a direction indicated by arrow A, parallel to an axis 490 of the actuating pin, the tension spring 488 extends and the fluid channel 486 opens allowing fluid to flow through the valve 470. It will be appreciated that although in this embodiment the opening element is a Schrader valve, other types of opening elements are conceivable and considered to be within the scope of the invention.

A first side of the membrane 450 is in fluid communication through opening 460 and fluid channel 458 with an environment outside the air spring 401 and outside the flexible member 404. In this example the fluid channel 458 includes a flow limiting valve 492 arranged for preventing a substantial flow of pressurized gas outwardly from the air spring into the ambient atmosphere resulting from a puncture in the membrane. Flow limiting valves are known in the art. Alternatively or additionally, the fluid channel 458 may include a filter arranged to prevent dirt and/or dust particles from coming in contact with the membrane 450. It is possible that such particles could damage the membrane 450.

Therefore the pressure in chamber 464 above the membrane 450 exerted on a first side of the membrane 450 is substantially equivalent to the ambient pressure outside the air spring 401 and outside the flexible member 404. The chamber 466 under the membrane 450 is in fluid communication through opening 468 with the main chamber 414. Therefore the pressure in the chamber 466 exerted on a second side of the membrane 450 is substantially equivalent to the pressure in the main chamber 414. Moreover, the opening 468 and the membrane 450 are sufficiently large to follow abrupt changes in pressure in the main chamber 414.

In this example, a rigid element 496, for example a metal washer, is placed between the membrane 450 and the actuating pins 480 of the opening element, in this example, three or four Schrader valves. Because in this example three or four Schrader valves are arranged around the fluid channel 458, the rigid element 496 need not be attached to the membrane 450. The rigid element 450 is arranged for transferring an actuation motion from the membrane to the actuating pin 480 of the Schrader valves 470.

In this embodiment, the Schrader valves 470 are threadably mounted to the air spring through the interaction of the screw threads 476 on the stem 472 of the Schrader valve 470 with the screw threads 496 on the air spring 401. Furthermore, due to this arrangement, a distance from the actuating pin 480 to the rigid element 494 and the membrane 450 is adjustable. Adjusting the distance from the actuating pin 480 to the rigid element 494 and the membrane 450 adjusts the first predetermined threshold.

The valve 424 functions in a manner similar to the previous examples. If an overpressure occurs in the main chamber 414, and the pressure in the main chamber 414 is greater than a second predetermined relative pressure, the second valve 424 of the valve 420 selectively opens, allowing pressurized air to flow from the main chamber 414 to the reserve chamber 418. An overpressure may occur when the air spring 401 compresses. This is a simple and reliable method for filling and maintaining the pressurized air in the reserve chamber 418. The air spring 401 is completely self-contained. Alternatively, or additionally, the reserve chamber 418 may be provided with a second inlet arranged to be in fluid communication with the pressurized gas supply system.

Although the first valve 422 is physically different from the corresponding valves in the previous example, the valves function in a similar fashion and can be mutually exchanged if desired. In this embodiment, in order to prevent air spring 401 from inverting, the first valve 422 selectively opens when an underpressure occurs in the main chamber 414 relative to the ambient pressure outside the air spring 401 and outside the flexible member 404. Specifically, in this example the membrane 450, the rigid element 494, the Schrader valves 470 are chosen and distanced from each other such that the Schrader valves 470 are actuated open by the membrane 450 when an underpressure of 0.05 bar (or more) occurs, i.e. the pressure in the main chamber is 0.05 bar (or more) less than the ambient pressure outside the air spring 401.

This results in an inflow of pressurized gas from the reserve chamber 418 through the fluid channels 486 of the Schrader valves 470. The pressure in the main chamber 414 rises due to the inflow of pressurized gas from the reserve chamber 418. When the pressure in the main chamber 414 is greater than a third predetermined threshold relative to the ambient pressure, in this case the third predetermined threshold is chosen to be substantially equal to the ambient pressure, the membrane 450 removes the actuating force applied to the opening element 470, and the first valve closes. It will be clear that actuating the opening element, also includes removing the actuating force from the opening element for closing the fluid channels 486, and respectively, the first valve 422.

The surface area of the membrane 450 is chosen to be large enough such that the valve 422 is sensitive to small underpressures in the main chamber 414 relative to the ambient pressure outside air spring 401 and outside the flexible member 404. Additionally, the fluid channel defined by the openings 468 and 460 and the chamber 466 can be chosen to be sufficiently large to ensure that the gas flowing from the reserve chamber 418 through to the main chamber 414 meets negligible flow resistance. Therefore the flow of gas from the reserve chamber 418 to the main chamber 414 is sufficient to prevent the air spring 401 from inverting. These and other parameters that influence the performance of the air spring could be chosen while keeping in mind the specific application of the air spring 401, i.e. gross trailer weight and expected road conditions.

The air spring according to the invention is particularly suited for preventing air spring inversion when a trailer is loaded onto a rail flatcar or ship, and then offloaded later, without being connected to a pressurized air supply system. In the example of Figure 8, the air spring 401 is loaded by a trailer (not shown) and is positioned between the chassis of the trailer and a rear axle of the trailer. In the worst case situation, when the trailer arrives at the rail distribution center, the trailer and the air spring 401 are disconnected from the pressurized gas system of the tractor, but the piping of the trailer's air suspension system is not sealed off, i.e. the main chamber 414 of the air spring 401 is in fluid communication with the ambient environment outside the air spring and outside the flexible member. Therefore, before the trailer is loaded onto the rail flat car, the pressure in the main chamber 414 of the air spring 401 has had ample opportunity to become substantially equal to the ambient pressure outside the air spring 401 and outside the flexible member 404. The equalization is not instantaneous and takes time because the piping of the air suspension system of the trailer is long and the cross-section of the piping is relatively small.

Therefore the begin pressure in the main chamber 414 of the air spring 401 is substantially equal to the ambient pressure, in this example 1 bar, outside the air spring and outside the flexible member. The begin volume of main chamber 414 of the air spring 401 is equal to the volume of the main chamber 414 of the air spring 401 when the air spring 401 is fully compressed. As the main chamber 414 of the air spring 401 is no longer pressurized, the weight of the trailer causes the air spring 401 to compress. In this condition, the air spring is fully compressed and the load of the trailer rests on a bump stop (not shown, but common). In this example, when the air spring 401 is fully compressed, the main chamber 414 of the air spring 401 has a volume of 16.3 liter.

When the trailer is lifted, the unloaded axel moves, e.g. pivots, away from the trailer's chassis causing the volume in the main chamber 414 of the air spring 401 to increase. In this example, the volume in the main chamber will increase to 41.7 liter.. At this volume, without the air spring being equipped with a reserve chamber 418, the pressure in the main chamber 414 would decrease to 0.39 bar. Although the piping of the trailer's pressurized gas system is not sealed off, the resistance of the piping of the air spring suspension system is too great to act as an anti-vacuum valve for the air spring 401. Any inflow of ambient air while the trailer is begin lifted, is considered to be negligible. At this underpressure, the ambient pressure outside of the air spring 401 is substantially greater than the pressure inside the main chamber 414 of the air spring 401, and the air spring 401 inverts. This causes the air spring to deform resulting in the flexible tubular member 404 having a concave shape. When the trailer is placed on the rail flatcar, the load of the trailer is reapplied to the axle. Due to the concave shape, the flexible member 404 of the air spring 401 is not able to roll correctly over the piston 406, and the air spring 401 is damaged.

When the air spring 401 includes a reserve volume of pressurized gas in the reserve chamber 418 inversion of the air spring can be prevented. As the trailer is lifted and the unloaded axle pivots away from the chassis, the volume of the main chamber 414 increases. Since the trailer is no longer connected to a pressurized air supply system, the pressure in the main chamber 414 drops, owing to the relationship between pressure and volume.

When the volume of the main chamber 414 expands to 17.16 liter the pressure inside the main chamber is 0.05 bar less than the ambient pressure outside the air spring 401 and the flexible member 404, in this example equal to be 1 bar. This underpressure in the main chamber causes the membrane 450 to bulge. This in turn displaces the rigid element 494, a metal washer, which actuates the actuating surface 482 of the actuating pin 480 of the Schrader valves 470. As mentioned above, three or four Schrader valves are used in this embodiment as the opening element. When a force from the membrane 450 is applied to the actuating pins 480 of the Schrader valves 470, the fluid channels 486 of the Schrader valves 470 open resulting in an inflow of pressurized gas from the reserve chamber 418 to the main chamber 414. This inflow of pressurized gas brings the pressure in the main chamber back to a safe valve pressure, referred to as the prevent pressure, and returns the flexible member 404 to its usual convex shape.

In this example, the prevent pressure is considered to be equal to the outside ambient air pressure, in this example 1 bar. In certain applications it may be desirable to choose a prevent pressure greater than the ambient pressure outside the air spring 401 and the flexible member 404. Furthermore, depending on the number of Schrader valves 470 used and the flow capacity of the fluid channels 486 of the Schrader valves 470, as the air spring continues to extend to its maximum volume, or to where the axle is mechanically limited, the membrane 450 may cause the Schrader valves 470 to open and close intermittently, or to remain open until the maximum volume is reached.

The axle moves, e.g. pivots, away from the chassis of the trailer, in significantly less time than it takes to load the trailer onto a rail flatcar. Therefore even if the Schrader valves are open while the axle is pivoting away from the chassis, the air spring has been returned to its convex shape before the load of the trailer is reapplied to the axle.

During rail or water transport, the trailer remains disconnected from a pressurized gas supply system, and if the piping of the pressurized gas supply system is again not sealed off, the pressure in the main chamber 414 of the air spring equalizes again to the ambient pressure outside the air spring 401 and outside the flexible member 404. It is also possible that the air spring is returned to its begin pressure, during rail or water transport. It is even possible that the air spring air pressure is reduced with respect to its begin pressure, during rail or water transport in order to reduce the height of the vehicle being transported.

In this example, the pressure in the main chamber equalizes over time as the piping of the trailer's pressurized gas system is not sealed off, and, during transport, any pressurized gas that flowed from the reserve chamber 418 to the main chamber 414 to prevent the air spring from inverting while the trailer was lifted and loaded onto the rail flatcar, eventually escapes through the piping of the air suspension system to the ambient environment. However, the trailer must still be offloaded, which will result in the axle pivoting a second time away from the trailer's chassis. Therefore, in this embodiment, it is preferable that the air spring is arranged to prevent air spring inversion of a fully extended air spring at least twice from a single charge of the reserve chamber. Therefore it is preferable that the air spring is arranged to prevent air spring inversion of a fully extended air spring at least twice from a single charge of the reserve chamber 418.

Preferably, the reserve chamber 418 has been filled before arriving at the rail distribution center from an overpressure(s) occurring in the main chamber 414. When the overpressure(s) occurs, i.e. the pressure in the main chamber 414 is greater than a second predetermined relative pressure, the second valve 424 of the valve 420 selectively opens, allowing pressurized air to flow from the main chamber 414 to the reserve chamber 418. Therefore the air spring 401 is self contained and the single charge of the reserve chamber 418 has been filled from the main chamber 414 through the second valve 424.

In this example, the reserve chamber 418 has a volume of 6.6 liter. Therefore the pressure of the pressurized gas stored in the reserve chamber 418 can be calculated by the formula below.

$$P_{Reserve}V_{Reserve} \geq P_{Prevent}V_{Reserve} + 2\left(P_{Prevent}V_{Extended} - P_{Begin}V_{Begin}\right) - \delta$$

In this example $P_{Prevent}$ is chosen to be 1.03 bar, which provides a safety margin, as the average sea-level pressure is 1.01 bar. $V_{Reserve}$ is 6.6 liter in this example. $P_{Begin}$ and $V_{Begin}$ are in this example equal to the ambient pressure, in this example 1 bar, and the fully compressed volume of the main chamber 414, in this example 16.3 liter. As mentioned above, in this example, when the air spring 401 is fully extended, the volume of the main chamber 414 is 41.7 liter. In this example, $\delta$ is chosen to be 0.

Working out the above formula results in a pressure of the reserve pressurized gas in the reserve chamber prior to loading preferably being greater than 9.07 bar so as to contain enough pressurized gas to allow filling the main chamber to prevent inversion both during loading and during offloading without refilling the reserve chamber between loading and offloading. Knowing the pressure and volume of the reserve pressurized gas provides parameters, specific to a given application, for constructing the reserve chamber. In this way, the reserve chamber is suitable for storing a volume of reserve pressurized gas at a pressure sufficient for preventing air spring inversion of a fully extended air spring at least twice from a single charge of the reserve chamber. In this example the reserve chamber is chosen to have a minimum maximum pressure rating of 9.07 bar.

If desired, one could choose $P_{Prevent}$ to be substantially equal to the ambient pressure, in this example equal to 1 bar, and equal to $P_{Begin}$. In this case the formula simplifies to

$$P_{Reserve}V_{Reserve} \geq V_{Reserve} + 2\left(V_{Extended} - V_{Begin}\right) - \delta.$$

If $V_{Reserve}$ is chosen to be 6.6 liter, then with $V_{Extended}$ equal to 41.7 liter and $V_{Begin}$ equal to 16.3 liter, and δ=0, the pressure of the reserve volume of gas stored in the reserve chamber 418 should be at least 8.7 bar. These specific pressure and volume requirements for the reserve pressurized gas allow the reserve chamber 414 to be constructed in accordance with a specific application. In this way, the reserve chamber is suitable for storing a volume of reserve pressurized gas at a pressure sufficient for preventing air spring inversion of a fully extended air spring at least twice from a single charge of the reserve chamber 418.

In some cases, e.g. when the air spring extends along an arc when the axle is unloaded. It may be desirable to choose the first predetermined pressure to be an overpressure, i.e. above the ambient pressure outside the air spring 401 and outside the flexible member 404, to prevent folds and/or damage to the air spring 401. In such a case, the inlet 416 of the air spring 401 may include a inlet valve 498, shown in Figure 8. The inlet valve 498 is arranged to selectively open when the pressure in the main chamber is greater than a fourth predetermined threshold, and to selectively close when the pressure in the main chamber is less than or equal to the fourth predetermined threshold. Hence, the inlet valve 498 allows to prevent a back flow of air out of the main chamber 414 when the pressure in the main chamber is less than or equal to the fourth predetermined threshold. The fourth predetermined threshold may be chosen to be equal to the super atmospheric first predetermined threshold. In this way, premature empting of the reserve chamber may be prevented. It will be appreciated that although the inlet valve 498 is only shown in Figure 8, it may be included, as needed, in any of the other embodiments of the invention.

It will appreciated that it is also possible that the begin pressure of the gas in the in the main chamber 414 and the begin volume of the main chamber 414 of the air spring 401 are equal to a working pressure and a working volume of the air spring 401. The working pressure and working volume refer to the loaded condition, or driving condition, of the air spring when the trailer is on the ground. It is noted that the working pressure of the volume of pressurized gas in the main chamber 414 is generally higher than the ambient pressure outside the air spring 401 and outside the flexible member. Furthermore, the working volume of the main chamber 414 is generally larger than the volume of the air spring 401 in its fully compressed state. Therefore, using the working pressure and volume of the air spring 401 for calculating the minimum pressure and volume relationship of the reserve pressurized gas, results in a smaller $P_{Reserve}V_{Reserve}$ value than when starting from the worst case situation, when the begin pressure is substantially equal to the ambient pressure and the air spring is fully compressed.

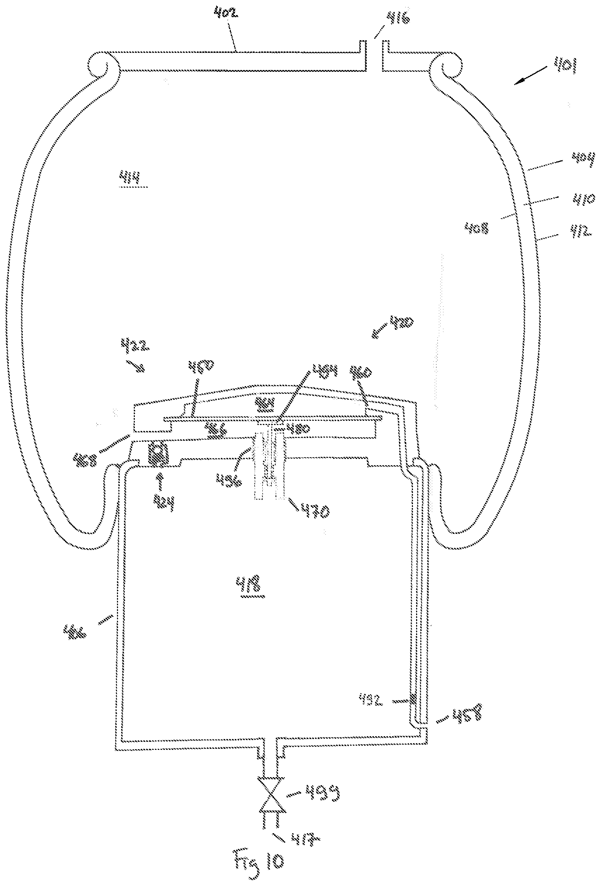

Figure 10 shows schematic cross section of another example of an air spring 401 according to a first embodiment. Similarly, the first side of the membrane 450 is in fluid communication through opening 460 and fluid channel 458 with an environment outside the air spring 401 and outside the flexible member 404. In this example, the fluid channel is a flexible tube that connects the chamber 464 to the ambient environment. The flexible tube 458 is again provided with a flow limiting valve 492 arranged for preventing a substantial flow of pressurized gas resulting from a puncture in the membrane. In this example, the opening element is a single Schrader valve 470. Furthermore, as a single Schrader valve 470 is used, the rigid element 494 is attached to the membrane 450 by means of an adhesive. In this example, the reserve chamber 418 is additionally provided with a second inlet 417 arranged to be in fluid communication with the pressurized gas supply system. In this way, the pressurized gas in the reserve chamber 418 can be refilled and/or maintained by a pressurized gas supply system. In order to prevent pressurized gas from escaping through the second inlet 417, the second inlet 417 includes a valve 499. In this example, the valve 499 is implemented as a one way valve, such that pressurized gas stored in the reserve chamber 418 is prevented from escaping through second inlet 417. The valve 499 may be similar to valve 498 included in the inlet 416. It will be appreciated that although the second inlet 417 and the valve 499 are only shown in Figure 10, the second inlet 417 and the valve 499 may be included, as needed, in any of the other embodiments of the invention. It is further noted that the second inlet 417 may be included in addition to the second valve 424 or as an alternative to the second valve 424.

In the foregoing specification, the invention has been described with reference to specific examples of embodiments of the invention. It will, however, be evident that various modifications and changes may be made therein without departing from the broader spirit and scope of the invention as set forth in the appended claims. For example, although the description refers to an air suspension system, it will be clear that the pressurized gas is not limited to pressurized air.

The air spring as depicted in the Figures generally relates to a rolling lobe air spring, where the flexible member rolls over the piston as the air spring compresses. The invention may be applied to other air springs as well, for example, double convoluted air spring. It will be appreciated that with regard to double or multiple convoluted air spring, the air spring is considered to be convex if each air bag of the multiple convoluted air spring is convex. Furthermore, the air spring is considered to be concave if at least one air bag of the multiple convoluted air spring is concave.

In the foregoing specification, the invention was described with reference to mechanically operated valves. It will be appreciated that the at least one valve may be embodied as a single valve or a plurality of valves. Furthermore, it is conceivable that the at least one valve is controlled by a controller. In this way, the controller can control the at least one valve to selectively open and/or selectively close. The controller may receive input from at least one pressure sensor. In the case that a pressure sensor is placed only in the main chamber, the controller can selectively open and/or selectively close the at least one valve based on the measured pressure in the main chamber.

Additionally, or alternatively, a pressure sensor may be included in the reserve chamber. In this way, the controller can selectively open and/or selectively close the at least one valve based on the pressure measured in the reserve chamber and/or the pressure measured in the main chamber. If both pressure sensors are used, a relative pressure between the main chamber and the reserve chamber could be used by the controller.

Additionally, or alternatively, a pressure sensor may be included outside of the air spring and outside the flexible member. In this way the ambient pressure outside the air spring and outside the flexible member can be measured. The controller can then selectively open and/or selectively close the at least one valve based on the pressure measured outside the air spring and/or the pressure measured in main chamber and/or the pressure measured in the reserve chamber. Depending on the placement of pressure sensors, different relative pressures are conceivable, for example, the measured pressure in the main chamber relative to the measured ambient pressure, measured outside the air spring and outside the flexible member.

It is therefore conceivable that a pressure sensor is placed in the main chamber, in the reserve chamber, or outside the air spring and outside the flexible member or any combination thereof. The controller may be embodied as dedicated electronic circuits, possibly including software code portions. The controller can also be embodied as software code portions executed on, and e.g. stored in a memory of, a programmable apparatus, such as a computer.

The air spring as depicted in the Figures is generally mounted in the shown upright orientation. It will be appreciated that it is not excluded that the air spring can be mounted in other orientations, such as upside down with respect to the orientation shown in the Figures.

However, other modifications, variations, and alternatives are also possible. The specifications, drawings and examples are, accordingly, to be regarded in an illustrative rather than in a restrictive sense.

In the claims, any reference signs placed between parentheses shall not be construed as limiting the claim. The word 'comprising' does not exclude the presence of other features or steps than those listed in a claim. Furthermore, the words 'a' and 'an' shall not be construed as limited to 'only one', but instead are used to mean 'at least one', and do not exclude a plurality. The mere fact that certain measures are recited in mutually different claims does not indicate that a combination of these measures cannot be used to advantage.

**Claims**

1. An air spring (401) comprising a mounting plate (402), a flexible tubular member (404), and a piston (406), wherein the flexible tubular member (404), the mounting plate (402) and the piston (406) form a substantially gastight main chamber (414), wherein the air spring (401) is provided with an inlet (416) arranged to be in fluid communication with a pressurized gas supply system, wherein the flexible member (404) defines a contour,

   wherein the air spring (401) further comprises a substantially gastight reserve chamber (418) directly mounted to or adjacent to one of the mounting plate (402) and the piston (406),

   wherein the substantially gastight reserve chamber (418) is in fluid communication with the main chamber (414) through at least one valve (422), and

   wherein the at least one valve (422) is arranged to selectively open if the pressure in the main chamber (414) is less than a first predetermined threshold resulting in an inflow of gas from the reserve chamber (418) to the main chamber,

   **characterized in that** the at least one valve (422) includes a membrane (450) having a first side and an opposite second side,

   wherein the first side of the membrane (450) is in fluid communication with an environment outside the air spring (401) such that the pressure exerted on the first side of the membrane (450) is substantially equal to an ambient pressure outside the air spring (401),

   wherein the second side of the membrane (450) is in fluid communication with the main chamber (414) of the air spring (401) such that the pressure exerted on the second side of the membrane (450) is substantially equal to the pressure in the main chamber (414) of the air spring (401)

wherein the membrane (450), acting as pressure sensitive element, is arranged for actuating an opening element (470) for selectively opening a fluid channel (486) between the reserve chamber (418) and the main chamber (414) if the pressure in the main chamber (414) is less than a first predetermined pressure relative to the ambient pressure.

2. Air spring according to claim 1, wherein the reserve chamber (418) has a volume and a pressure rating sufficient to store an amount of pressurized gas required for preventing air spring inversion, wherein preferably the volume and the pressure rating of the reserve chamber (418) is sufficient for storing an amount of pressurized gas required for preventing air spring inversion of a fully extended air spring (401) at least twice from a single charge of the reserve chamber (418).

3. Air spring according to claim 1 or 2, wherein the first predetermined threshold is equal to or lower than the ambient pressure outside the air spring and outside the flexible member, or wherein the first threshold is in the range of 0 to 0.4 bar above the ambient pressure outside the air spring and outside the flexible member.

4. Air spring according to any one of claims 1-3, wherein the membrane (450) is arranged for actuating the opening element (470) for selectively closing off the fluid channel (486) if the pressure in the main chamber (414) is greater than a third predetermined threshold.

5. Air spring according to any one of the preceding claims, wherein the opening element (470) is biased closed.

6. Air spring according to any one of claims 1-5, wherein the first valve includes a rigid element arranged for transferring an actuating motion from the membrane to the opening element.

7. Air spring according to any one of claims 1-6, wherein the opening element is at least one Schrader valve including an actuating pin arranged for being actuated by the membrane for selectively opening and closing the fluid channel, wherein the Schrader valve of the first valve is optionally threadably mounted to the air spring such that a distance from the actuating pin to the membrane is adjustable, and wherein adjusting the distance from the actuating pin to the membrane results in the adjustment of the first predetermined threshold.

8. Air spring according to any one of claims 1-7, wherein the first side of the membrane is in fluid communication with an environment outside the air spring through a flow limiting valve arranged for preventing a substantial flow of pressurized gas from the main chamber to an ambient environment outside the air spring and outside the flexible member resulting from a puncture in the membrane.

9. Air spring according to any one of the preceding claims, wherein the reserve chamber is provided with a second inlet arranged to be in fluid communication with a pressurized gas supply system.

10. A method for preventing air spring inversion comprising the steps of:

providing an air spring (1, 101, 201, 301, 401) including a mounting plate (2, 102, 202, 302, 402), a flexible tubular member (4, 104, 204, 304, 404), and a piston (6, 106, 206, 306, 406) forming a substantially gastight main chamber (14, 114, 214, 314, 414);
providing a substantially gastight reserve chamber (18, 118, 218, 318, 418) mounted directly to or adjacent to one of the mounting plate (2, 102, 202, 302, 402) and the piston (6, 106, 206, 306, 406),
providing a fluid communication connection between the reserve chamber (18, 118, 218, 318, 418) and the main chamber (14, 114, 214, 314, 414) through at least one valve (20, 120, 220, 320, 420), and
selectively opening the at least one valve (20, 120, 220, 320, 420) if the pressure in the main chamber (14, 114, 214, 314, 414) is less than a first predetermined threshold resulting in an inflow of gas from the reserve chamber (18, 118, 218, 318, 418) to the main chamber (14, 114, 214, 314, 414).

11. Method according to claim 10, wherein the method further includes the step of:
selectively closing the at least one valve (20, 120, 220, 320, 420) if the pressure in the main chamber (14, 114, 214, 314, 414) is greater than or equal a third predetermined pressure relative to the ambient pressure outside the air spring (1, 101, 201, 301, 401) and outside the flexible member (4, 104, 204, 304, 404).

12. Method according to claim 10 or 11, wherein the method further includes the step of:

storing, in the reserve chamber (18, 118, 218, 318, 418) having a volume and a pressure rating, an amount of pressurized gas required for preventing air spring inversion, wherein the volume of the amount of pressurized gas is substantially equal to the volume of the reserve chamber (18, 118, 218, 318, 418), and wherein the pressure of the amount of pressurized gas is less than or equal to the pressure rating of the reserve chamber (18, 118, 218, 318, 418), wherein preferably the amount of pressurized gas is sufficient for preventing air spring inversion of a fully extended air spring (1, 101, 201, 301, 401) at least twice from a single charge of the reserve chamber (18, 118, 218, 318, 418).

13. Method of preventing air spring inversion according to any one of claims 10-12,
wherein the method further comprises the step of: filling the reserve chamber (18, 118, 218, 318, 418) with pressurized gas by selectively opening the at least one valve (20, 120, 220, 320, 420) when the pressure in the main chamber (14, 114, 214, 314, 414) is greater than a second predetermined threshold.

14. A suspension system including, a pressurized gas supply system and one or more air springs (401) according to any one of claims 1-9, wherein the pressurized gas supply system is connected to the inlets of the one or more air springs (401), preferably further including a controller arranged to regulate the pressure of the gas of the pressurized gas supply system supplied to the one or more air springs (401).

15. A system comprising a road vehicle including an air spring (401) according to any one of claims 1-9, and a hoisting device arranged for hoisting the road vehicle.

## Patentansprüche

1. Luftfeder (401) mit einer Montageplatte (402), einem flexiblen röhrenförmigen Element (404) und einem Kolben (406), wobei das flexible röhrenförmige Element (404), die Montageplatte (402) und der Kolben (406) eine im Wesentlichen gasdichte Hauptkammer (414) bilden, wobei die Luftfeder (401) mit einem Einlass (416) versehen ist, der mit einem Druckgasversorgungssystem in Fluidverbindung steht, wobei das flexible Element (404) eine Kontur definiert,
wobei die Luftfeder (401) weiter eine im Wesentlichen gasdichte Reservekammer (418) umfasst, die direkt an oder neben einer der Montageplatten (402) oder des Kolbens (406) befestigt ist,
wobei die im Wesentlichen gasdichte Reservekammer (418) durch mindestens ein Ventil (422) mit der Hauptkammer (414) in Fluidverbindung steht, und
wobei das mindestens eine Ventil (422) so angeordnet ist, dass es selektiv öffnet, wenn der Druck in der Hauptkammer (414) unter einem ersten vorgegebenen Schwellenwert liegt, was zu einem Eintritt von Gas aus der Reservekammer (418) in die Hauptkammer führt,
**dadurch gekennzeichnet, dass** das mindestens eine Ventil (422) eine Membran (450) umfasst, die eine erste Seite und eine gegenüberliegende zweite Seite aufweist,
wobei die erste Seite der Membran (450) mit einer Umgebung außerhalb der Luftfeder (401) in Fluidverbindung steht, so dass der Druck, der auf die erste Seite der Membran (450) ausgeübt wird, im Wesentlichen gleich einem Umgebungsdruck außerhalb der Luftfeder (401) ist,
wobei die zweite Seite der Membran (450) mit der Hauptkammer (414) der Luftfeder (401) in Fluidverbindung steht, so dass der Druck, der auf die zweite Seite der Membran (450) ausgeübt wird, im Wesentlichen gleich dem Druck in der Hauptkammer (414) der Luftfeder (401) ist
wobei die Membran (450), die als druckempfindliches Element wirkt, angeordnet ist, um ein Öffnungselement (470) zum selektiven Öffnen eines Flüssigkeitskanals (486) zwischen der Reservekammer (418) und der Hauptkammer (414) zu betätigen, wenn der Druck in der Hauptkammer (414) niedriger ist als ein erster vorgegebener Druck in Bezug auf den Umgebungsdruck.

2. Luftfeder nach Anspruch 1, wobei die Reservekammer (418) ein Volumen und eine Druckrate aufweist, die ausreichen, um eine Menge an Druckgas zu speichern, die ausreichend sind, um das Umdrehen der Luftfeder zu verhindern, wobei vorzugsweise das Volumen und die Druckrate der Reservekammer (418) ausreichend ist, um eine Menge an Druckgas zu speichern, die erforderlich ist, um ein Umdrehen einer vollständig ausgezogenen Luftfeder (401) mindestens zweimal von einer einzigen Ladung der Reservekammer (418) zu verhindern.

3. Luftfeder nach Anspruch 1 oder 2, wobei der erste vorgegebene Schwellwert gleich oder niedriger als der Umgebungsdruck außerhalb der Luftfeder und außerhalb des flexiblen Elements ist, oder wobei der erste Schwellwert im Bereich von 0 bis 0,4 bar über dem Umgebungsdruck außerhalb der Luftfeder und außerhalb des flexiblen Elements liegt.

4. Luftfeder nach einem der Ansprüche 1 bis 3, wobei die Membran (450) zum Betätigen des Öffnungselements (470) zum selektiven Schließen des Flüssigkeitskanals (486) angeordnet ist, wenn der Druck in der Hauptkammer (414) größer als ein dritter vorgegebener Schwellenwert ist.

5. Luftfeder nach einem der vorhergehenden Ansprüche, wobei das Öffnungselement (470) vorgespannt geschlossen ist.

6. Luftfeder nach einem der Ansprüche 1 bis 5, wobei das erste Ventil ein starres Element aufweist, das zum Übertragen einer Betätigungsbewegung von der Membran auf das Öffnungselement angeordnet ist.

7. Luftfeder nach einem der Ansprüche 1 bis 6, wobei das Öffnungselement mindestens ein Schrader-Ventil ist, das einen Betätigungsstift umfasst, der zur Betätigung durch die Membran zum selektiven Öffnen und Schließen des Flüssigkeitskanals angeordnet ist, wobei das Schrader-Ventil des ersten Ventils optional an der Luftfeder durch ein Gewinde befestigt ist, so dass ein Abstand von dem Betätigungsstift zu der Membran einstellbar ist, und wobei das Einstellen des Abstandes von dem Betätigungsstift zu der Membran zu dem Einstellen des ersten vorgegebenen Schwellenwertes führt.

8. Luftfeder nach einem der Ansprüche 1 bis 7, wobei die erste Seite der Membran durch ein Durchflussbegrenzungsventil in Fluidverbindung mit einer Umgebung außerhalb der Luftfeder steht, die so angeordnet ist, dass sie einen erheblichen Fluss von Druckgas von der Hauptkammer zu einer Umgebung außerhalb der Luftfeder und außerhalb des flexiblen Elements verhindert, der aus einem Durchstoß in der Membran resultiert.

9. Luftfeder nach einem der vorhergehenden Ansprüche, wobei die Reservekammer mit einem zweiten Einlass versehen ist, der so angeordnet ist, dass er mit einem Druckgasversorgungssystem in Fluidverbindung steht.

10. Verfahren zum Verhindern des Umdrehens der Luftfeder, umfassend die folgenden Schritte:

Bereitstellen einer Luftfeder (1, 101, 201, 301, 401) mit einer Montageplatte (2, 102, 202, 302, 402), einem flexiblen röhrenförmigen Element (4, 104, 204, 304, 404), und einem Kolben (6, 106, 206, 306, 406), der eine im Wesentlichen gasdichte Hauptkammer (14, 114, 214, 314, 414) bildet;
Bereitstellen einer im Wesentlichen gasdichten Reservekammer (18, 118, 218, 318, 418), die direkt an oder neben einer der Montageplatten (2, 102, 202, 302, 402) oder dem Kolben (6, 106, 206, 306, 406) befestigt ist,
Herstellen einer Fluidverbindung zwischen der Reservekammer (18, 118, 218, 318, 418) und der Hauptkammer (14, 114, 214, 314, 414) durch mindestens ein Ventil (20, 120, 220, 320, 420), und
selektives Öffnen des mindestens einen Ventils (20, 120, 220, 320, 420), wenn der Druck in der Hauptkammer (14, 114, 214, 314, 414) unter einem ersten vorgegebenen Schwellenwert liegt, der zu einem Eintritt von Gas aus der Reservekammer (18, 118, 218, 318, 418) in die Hauptkammer (14, 114, 214, 314, 414) führt.

11. Verfahren nach Anspruch 10, wobei das Verfahren weiter den folgenden Schritt umfasst:
selektives Schließen des mindestens einen Ventils (20, 120, 220, 320, 420), wenn der Druck in der Hauptkammer (14, 114, 214, 314, 414) größer oder gleich einem dritten vorgegebenen Druck in Bezug auf den Umgebungsdruck außerhalb der Luftfeder (1, 101, 201, 301, 401) und außerhalb des flexiblen Elements (4, 104, 204, 304, 404) ist.

12. Verfahren nach Anspruch 10 oder 11, wobei das Verfahren weiter den folgenden Schritt umfasst:
Speichern, in der Reservekammer (18, 118, 218, 318, 418), die ein Volumen und eine Druckrate aufweist, einer erforderlichen Menge an Druckgas, die zum Verhindern des Umdrehens der Luftfeder erforderlich ist, wobei das Volumen der Menge an Druckgas im Wesentlichen gleich dem Volumen der Reservekammer (18, 118, 218, 318, 418) ist, und wobei der Druck der Menge an Druckgas kleiner oder gleich der Druckrate der Reservekammer (18, 118, 218, 318, 418) ist, wobei vorzugsweise die Menge an Druckgas ausreicht, um ein Umdrehen der Luftfeder einer vollständig ausgezogenen Luftfeder (1, 101, 201, 301, 401) mindestens zweimal aus einer einzigen Ladung der Reservekammer (18, 118, 218, 318, 418) zu verhindern.

13. Verfahren zum Verhindern des Umdrehens der Luftfeder nach einem der Ansprüche 10-12,
wobei das Verfahren weiter den folgenden Schritt umfasst: Befüllen der Reservekammer (18, 118, 218, 318, 418) mit Druckgas durch selektives Öffnen des mindestens einen Ventils (20, 120, 220, 320, 420), wenn der Druck in der Hauptkammer (14, 114, 214, 314, 414) größer als ein zweiter vorgegebener Schwellenwert ist.

**14.** Aufhängungssystem mit einem Druckgasversorgungssystem und einer oder mehreren Luftfedern (401) nach einem der Ansprüche 1 bis 9, wobei das Druckgasversorgungssystem mit den Einlässen der einen oder mehreren Luftfedern (401) verbunden ist, das vorzugsweise weiter eine Steuerung umfasst, die angeordnet ist, um den Druck des Gases des Druckgasversorgungssystems, das der einen oder den mehreren Luftfedern (401) zugeführt wird, zu regeln.

**15.** System mit einem Straßenfahrzeug mit einer Luftfeder (401)
nach einem der Ansprüche 1 bis 9 und eine Hubvorrichtung, die zum Heben des Straßenfahrzeugs angeordnet ist.

## Revendications

**1.** Ressort pneumatique (401) comprenant une plaque de montage (402), un élément tubulaire flexible (404) et un piston (406), dans lequel l'élément tubulaire flexible (404), la plaque de montage (402) et le piston (406) forment une chambre principale sensiblement étanche aux gaz (414), dans lequel le ressort pneumatique (401) est pourvu d'une entrée (416) agencée pour être en communication fluidique avec un système d'alimentation en gaz comprimé, dans lequel l'élément flexible (404) définir un contour,
dans lequel le ressort pneumatique (401) comprend en outre une chambre de réserve sensiblement étanche aux gaz (418) directement montée sur ou adjacente à l'un parmi la plaque de montage (402) et le piston (406),
dans lequel la chambre de réserve sensiblement étanche aux gaz (418) est en communication fluidique avec la chambre principale (414) par l'intermédiaire d'au moins un clapet (422), et
dans lequel l'au moins un clapet (422) est agencé pour s'ouvrir sélectivement si la pression dans la chambre principale (414) est inférieure à un premier seuil prédéfini résultant dans un écoulement entrant de gaz depuis la chambre de réservoir (418) vers la chambre principale,
**caractérisé en ce que** l'au moins un clapet (422) inclut une membrane (450) ayant un premier côté et un second côté opposé,
dans lequel le premier côté de la membrane (450) est en communication fluidique avec un environnement extérieur au ressort pneumatique (401) de telle sorte que la pression exercée sur le second côté de la membrane (450) est sensiblement égale à la pression ambiante à l'extérieur du ressort pneumatique (401,
dans lequel le second côté de la membrane (450) est en communication fluidique avec la chambre principale (414) du ressort pneumatique (401) de telle sorte que la pression exercée sur le second côté de la membrane (450) est sensiblement égale à la pression dans la chambre principale (414) du ressort pneumatique (401),
dans lequel la membrane (450), servant d'élément sensible à la pression, est agencée pour actionner un élément d'ouverture (470) pour ouvrir sélectivement un canal de fluide (486) entre la chambre de réserve (418) et la chambre principale (414) si la pression dans la chambre principale (414) est inférieure à une première pression prédéterminée par rapport à la pression ambiante.

**2.** Ressort pneumatique selon la revendication 1, dans lequel la chambre de réserve (418) a un volume et une pression nominale suffisants pour stocker une quantité de gaz comprimé nécessaire pour empêcher une inversion de ressort pneumatique, dans lequel de préférence le volume et la pression nominale de la chambre de réserve (418) sont suffisants pour stocker une quantité de gaz comprimé nécessaire pour empêcher l'inversion de ressort pneumatique d'un ressort pneumatique totalement étendu (401) faisant au moins le double d'une simple charge de la chambre de réserve (418).

**3.** Ressort pneumatique selon la revendication 1 ou 2, dans lequel le premier seuil prédéterminé est égal ou inférieur à la pression ambiante à l'extérieur du ressort pneumatique et à l'extérieur de l'élément flexible, ou dans lequel le premier seuil est dans la plage de 0 à 0,4 bar au-dessus de la pression ambiante à l'extérieur du ressort pneumatique et à l'extérieur de l'élément flexible.

**4.** Ressort pneumatique selon l'une quelconque des revendications 1-3, dans lequel la membrane (450) est agencée pour actionner l'élément d'ouverture (470) pour fermer sélectivement le canal de fluide (486) si la pression dans la chambre principale (414) est supérieure à un troisième seuil prédéterminé.

**5.** Ressort pneumatique selon l'une quelconque des revendications précédentes, dans lequel l'élément d'ouverture (470) est sollicité à l'état fermé.

**6.** Ressort pneumatique selon l'une quelconque des revendications 1-5, dans lequel le premier clapet inclut un élément rigide agencé pour transférer un mouvement d'actionnement de la membrane à l'élément d'ouverture.

7. Ressort pneumatique selon l'une quelconque des revendications 1-6, dans lequel l'élément d'ouverture est au moins un clapet Schrader incluant une tige d'actionnement agencé pour être actionnée par la membrane pour sélectivement ouvrir et fermer le canal de fluide, dans lequel le clapet de Schrader du premier clapet est optionnellement monté par filetage sur le ressort pneumatique de telle sorte qu'une distance de la tige d'actionnement à la membrane est ajustable, et dans lequel l'ajustement de la distance de la tige d'actionnement à la membrane entraîne l'ajustement du premier seuil prédéterminé.

8. Ressort pneumatique selon l'une quelconque des revendications 1-7, dans lequel le premier côté de la membrane est en communication fluidique avec un environnement extérieur au ressort pneumatique par l'intermédiaire d'un clapet de limitation d'écoulement agencé pour empêcher un écoulement substantiel de gaz comprimé depuis la chambre principale vers un environnement ambiant extérieur au ressort pneumatique et extérieur à l'élément flexible résultant d'une perforation de la membrane.

9. Ressort pneumatique selon l'une quelconque des revendications précédentes, dans lequel la chambre de réserve est pourvue d'une deuxième entrée agencée pour être en communication fluidique avec un système d'alimentation en gaz comprimé.

10. Procédé pour empêcher une inversion de ressort pneumatique comprenant les étapes consistant à :

fournir un ressort pneumatique (1, 101, 201, 301, 401) incluant une plaque de montage (2, 102, 202, 302, 402), un élément tubulaire flexible (4, 104, 204, 304, 404), et un piston (6, 106, 206, 306, 406) formant une chambre principale sensiblement étanche aux gaz (14, 114, 214, 314, 414) ;
fournir une chambre de réserve sensiblement étanche aux gaz (18, 118, 218, 318, 418) montée directement sur ou adjacente à l'un parmi la plaque de montage (2, 102, 202, 302, 402)) et le piston (6, 106, 206, 306, 406), fournir un raccordement à communication fluidique entre la chambre de réserve (18, 118, 218, 318, 418) et la chambre principale (14, 114, 214, 314, 414) par l'intermédiaire d'au moins un clapet (20, 120, 220, 320, 420), et ouvrir sélectivement l'au moins un clapet (20, 120, 220, 320, 420) si la pression dans la chambre principale (14, 114, 214, 314, 414) est inférieure à un premier seuil prédéterminé résultant dans un écoulement entrant de gaz depuis la chambre de réserve (18, 118, 218, 318, 418) vers la chambre principale (14, 114, 214, 314, 414).

11. Procédé selon la revendication 10, dans lequel le procédé inclut en outre l'étape consistant à :
fermer sélectivement l'au moins un clapet (20, 120, 220, 320, 420) si la pression dans la chambre principale (14, 114, 214, 314, 414) est supérieure ou égale à un troisième seuil prédéterminé par rapport à la pression ambiante extérieure au ressort pneumatique (1, 101, 201, 301, 401) et extérieure à l'élément flexible (4, 104, 204, 304, 404).

12. Procédé selon la revendication 10 ou 11, dans lequel le procédé inclut en outre l'étape consistant à :
stocker, dans la chambre de réserve (18, 118, 218, 318, 418) ayant un volume et une pression nominale, une quantité de gaz comprimé nécessaire pour empêcher une inversion de ressort pneumatique, dans lequel le volume de la quantité de gaz comprimé est sensiblement égal au volume de la chambre de réserve (18, 118, 218, 318, 418), et dans lequel la pression de la quantité de gaz comprimé est inférieure ou égale à la pression nominale de la chambre de réserve (18, 118, 218, 318, 418), dans lequel de préférence la quantité de gaz comprimé est suffisante pour empêcher l'inversion de ressort pneumatique d'un ressort pneumatique totalement étendu (1, 101, 201, 301, 401) faisant au moins le double d'une simple charge de la chambre de réserve (18, 118, 218, 318, 418).

13. Procédé pour empêcher une inversion de ressort pneumatique selon l'une quelconque des revendications 10-12, dans lequel le procédé comprend en outre l'étape consistant à : remplir la chambre de réserve (18, 118, 218, 318, 418) de gaz comprimé en ouvrant sélectivement l'au moins un clapet (20, 120, 220, 320, 420) quand la pression dans la chambre principale (14, 114, 214, 314, 414) est supérieure à un deuxième seuil prédéterminé.

14. Système de suspension incluant un système d'alimentation en gaz comprimé et un ou plusieurs ressorts pneumatiques (401) selon l'une quelconque des revendications 1-9, dans lequel le système d'alimentation en gaz comprimé est raccordé aux entrées des un ou plusieurs ressorts pneumatiques (401), incluant en outre de préférence un dispositif de commande agencé pour réguler la pression du gaz du système d'alimentation en gaz comprimé apporté aux un ou plusieurs ressorts pneumatiques (401).

15. Système comprenant un véhicule routier incluant un ressort pneumatique (401) selon l'une quelconque des revendications 1-9, et un dispositif de levage agencé pour lever le véhicule routier.

Fig. 1

Fig. 2

Fig. 3

Fig. 4

Fig. 5

Fig. 6

Fig. 7

Fig 8

fig 9

Fig 10

**REFERENCES CITED IN THE DESCRIPTION**

**Patent documents cited in the description**

- EP 0474171 A1
- US 7104561 B

- DE 102010017638
- US 7104561 B1